# EUROPEAN PATENT APPLICATION

(11) **EP 3 917 178 A1**
(43) Date of publication of application: **01.12.2021**
(21) Application number: 20755318.1
(22) Date of filing: 11.02.2020
(51) Int. Cl.: H04W 4/40

(54) **WIRELESS COMMUNICATION METHOD AND APPARATUS**

(30) Priority: 15.02.2019 CN 201910117981
(71) Applicant: Huawei Technologies Co., Ltd., Longgang Shenzhen, Guangdong 518129 (CN)
(72) Inventor: SHI, Xiaoli, Shenzhen, Guangdong 518129 (CN); PENG, Wenjie, Shenzhen, Guangdong 518129 (CN); WANG, Jun, Shenzhen, Guangdong 518129 (CN); DAI, Mingzeng, Shenzhen, Guangdong 518129 (CN); ZENG, Qinghai, Shenzhen, Guangdong 518129 (CN)
(74) Representative: Gill Jennings & Every LLP
(86) International application number: PCT/CN2020/074685
(87) International publication number: WO 2020/164464

(57) **Abstract**

This application provides a wireless communications method and apparatus, which may be applied to a V2X scenario. The wireless communications method includes: A first device receives configuration information sent by a first access device, where the configuration information is used to indicate at least one resource pool used for inter-device communication, and the resource pool includes a plurality of resources; and the first device sends a measurement report to the first access device, where the measurement report includes an index of a candidate resource in the resource pool and at least one of the following information: a first threshold used by the first device for selecting the candidate resource, a priority of the candidate resource, signal quality of the candidate resource, a type of the resource pool to which the candidate resource belongs, and a communications status in which the first device selects the candidate resource, where the type of the resource pool includes a common type, an exceptional type, or a dedicated type, and the communications status includes a connected state, a non-connected state, or a radio link failure state. Therefore, an access device can effectively evaluate resource interference. This can optimize a communications parameter and improve user experience.

## Description

This application claims priority to Chinese Patent Application No. 201910117981.0, filed with the China National Intellectual Property Administration on February 15, 2019 and entitled "WIRELESS COMMUNICATIONS METHOD AND APPARATUS", which is incorporated herein by reference in its entirety.

### TECHNICAL FIELD

Embodiments of this application relate to the communications field, and more specifically, to a wireless communications method and apparatus, and a communications device.

### BACKGROUND

To improve communications quality, in a communications technology such as a vehicle to everything (vehicle to everything, V2X) technology, a communications device (for example, a vehicle) may monitor a radio resource; select a candidate resource from a plurality of resources, where the candidate resource may be a specified proportion of resources in the plurality of resources; and report, to an access device, a measurement report used to report an identifier of the candidate resource, so that the access device indicates, based on a measurement result, the communications device to adjust a communications parameter.

However, with development of communications technologies, requirements on communications reliability and quality are increasingly high. Resource interference cannot be further effectively evaluated based on only an existing measurement report, and consequently a communications parameter cannot be further optimized. As a result, an increasing communications requirement cannot be satisfied.

Therefore, it is urgent to provide a technology that can optimize a communications parameter and improve user experience.

### SUMMARY

This application provides a wireless communications method and apparatus, so that an access device can effectively evaluate resource interference. This can optimize a communications parameter and improve user experience.

According to a first aspect, a wireless communications method is provided. The method includes: receiving configuration information from a first access device, where the configuration information is used to indicate at least one resource pool used for inter-device communication, and the resource pool includes a plurality of resources; and sending a measurement report to the first access device, where the measurement report includes an index of a candidate resource in the resource pool and at least one of the following information: a first threshold used by a first device for selecting the candidate resource, a priority of the candidate resource, signal quality of the candidate resource, a type of the resource pool to which the candidate resource belongs, and a communications status in which the first device selects the candidate resource, where the type of the resource pool includes a common type, an exceptional type, or a dedicated type, and the communications status includes a connected state, a non-connected state, or a radio link failure state; and the candidate resource includes one or more resources.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

The first device may include a device, for example, a terminal device, that can perform inter-device communication based on a resource configured by an access device.

Optionally, the inter-device communication includes vehicle to everything V2X communication.

The resource pool may be a resource used for sidelink (sidelink) control information and data transmission.

Optionally, a resource in the resource pool includes at least one of a time domain resource, a frequency domain resource, and a time-frequency domain resource.

For example, the resource may include a resource block RB.

For another example, in V2X, the resource may include a subchannel (subchannel) including a plurality of consecutive RBs, and the subchannel may be a minimum unit for sidelink (Sidelink) scheduling/data transmission.

Optionally, the common type includes a common transmit type and a common receive type.

The "priority of the candidate resource" may be understood as a priority of data transmission (or a data packet) on the candidate resource.

The "signal quality of the candidate resource" may be understood as signal quality of a reference signal for data transmission on the candidate resource.

For example, the signal quality of the candidate resource may be determined based on a reference signal received power RSRP of the candidate resource, or the signal quality of the candidate resource includes a reference signal received power RSRP of the candidate resource.

For another example, the signal quality of the candidate resource may be determined based on reference signal received quality RSRQ of the candidate resource, or the signal quality of the candidate resource includes reference signal received quality RSRQ of the candidate resource.

Optionally, the first threshold includes a priority threshold, and the candidate resource is a resource whose priority is less than or equal to the priority threshold in the resource pool.

Therefore, according to the solution in this application, a priority of a selected candidate resource (or data transmission on the candidate resource) can be relatively low, to be specific, interference to the selected candidate resource can be relatively low. This can improve reliability and accuracy of communication performed by the first device by using the candidate resource.

Optionally, the first threshold includes a signal quality threshold, and the candidate resource is a resource whose signal quality is less than or equal to the signal quality threshold in the resource pool.

Therefore, according to the solution in this application, signal quality (for example, an RSRP or RSRQ) of a selected candidate resource (or data transmission on the candidate resource) can be relatively low, to be specific, interference to the selected candidate resource can be relatively low. This can improve reliability and accuracy of communication performed by the first device by using the candidate resource.

Optionally, the first threshold includes a priority threshold, and the candidate resource is a resource whose priority is less than or equal to the priority threshold in the resource pool, where the priority threshold includes a basic priority threshold, or the priority threshold includes a basic priority threshold and a threshold obtained after the basic priority threshold is adjusted P1 times.

Optionally, the first threshold includes a signal quality threshold, and the candidate resource is a resource whose signal quality is less than or equal to the signal quality threshold in the resource pool, where the signal quality threshold includes a basic signal quality threshold, or the priority threshold includes a basic signal quality threshold and a threshold obtained after the basic signal quality threshold is adjusted P2 times.

Optionally, the method further includes: The first device receives first update information sent by the first access device. The first update information is used to indicate an updated basic threshold, and the updated basic threshold is obtained through updating by the first access device based on the measurement report.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the method further includes: The first device receives second update information sent by the first access device. The second update information is used to indicate an updated resource pool, and the updated resource pool (for example, a resource pool size) is obtained through updating by the first access device based on the measurement report.

According to the solution in this application, an access device updates a resource pool based on a measurement report, so that interference to a resource pool used by a terminal device can be reduced. This can further improve communications reliability and improve user experience.

Optionally, the method further includes: The first device receives third update information sent by the first access device. The third update information is used to indicate an updated scheduling mode (for example, scheduling or autonomous selection), and the updated scheduling mode is obtained through updating by the first access device based on the measurement report.

According to the solution in this application, an access device updates a scheduling mode based on a measurement report, so that a scheduling mode of a terminal device can better adapt to a current interference status. This can further improve communications reliability and improve user experience.

Optionally, the method further includes: The first device receives fourth update information sent by the first access device. The fourth update information is used to indicate an updated zone (zone), and the updated zone (for example, a zone size, a zone location, or a corresponding resource) is obtained through updating by the first access device based on the measurement report.

According to the solution in this application, an access device updates a zone based on a measurement report, so that an updated zone can better adapt to a current interference status. This can further improve communications reliability and improve user experience.

Optionally, the resource pool includes a resource scheduled by the first access device for the first device.

To be specific, the resource pool may include a resource used in scheduling mode (which may also be referred to as mode3 or model).

Optionally, the resource pool includes a resource autonomously selected by the first device.

To be specific, the resource pool may include a resource used in autonomous selection mode (which may also be referred to as mode4 or mode2).

Optionally, the measurement report is recorded in a minimization of drive test log of the first device.

Optionally, the measurement report is recorded in mobility history information (mobility history information) of the first device.

Optionally, the first access device includes a distributed unit DU.

Optionally, the first access device includes a centralized unit CU.

Optionally, the measurement report is periodically sent by the first device.

Optionally, the measurement report is sent by the first device after the first device determines that a preset first event occurs.

According to a second aspect, a wireless communications method is provided. The method includes: sending configuration information to a first device, where the configuration information is used to indicate at least one resource pool used for inter-device communication, and the resource pool includes a plurality of resources; and receiving a measurement report from the first device, where the measurement report includes an index of a candidate resource in the resource pool and at least one of the following information: a first threshold used by the first device for selecting the candidate resource, a priority of the candidate resource, signal quality of the candidate resource, a type of the resource pool to which the candidate resource belongs, and a communications status in which the terminal device selects the candidate resource, where the type of the resource pool includes a common type, an exceptional type, or a dedicated type, and the communications status includes a connected state, a non-connected state, or a radio link failure state; and the candidate resource includes one or more resources.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the method further includes: The first access device updates the basic threshold based on the measurement report, and the first access device sends first update information to the first device. The first update information is used to indicate an updated basic threshold.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the method further includes: The first access device updates the resource pool (for example, a resource pool size) based on the measurement report.

Optionally, the method further includes: The first access device sends second update information to the first device. The second update information is used to indicate an updated resource pool.

According to the solution in this application, an access device updates a resource pool based on a measurement report, so that interference to a resource pool used by a terminal device can be reduced. This can further improve communications reliability and improve user experience.

Optionally, the method further includes: The first access device updates a scheduling mode of the terminal device (for example, updates scheduling to autonomous selection, or updates autonomous selection to scheduling) based on the measurement report.

Optionally, the method further includes: The first access device sends third update information to the first device. The third update information is used to indicate an updated scheduling mode.

According to the solution in this application, an access device updates a scheduling mode based on a measurement report, so that a scheduling mode of a terminal device can better adapt to a current interference status. This can further improve communications reliability and improve user experience.

Optionally, the method further includes: The first access device updates a zone (zone) based on the measurement report.

For example, the first access device updates a zone size, a zone location, or a corresponding resource.

Optionally, the method further includes: The first access device sends fourth update information to the first device. The fourth update information is used to indicate an updated zone.

According to the solution in this application, an access device updates a zone based on a measurement report, so that an updated zone can better adapt to a current interference status. This can further improve communications reliability and improve user experience.

Optionally, the method further includes: The first access device receives first resource indication information sent by at least one second access device, where the first resource indication information is used to indicate a resource pool used by the second access device.

Optionally, the first resource indication information is used to indicate a type of the resource pool used by the second access device, and the type of the resource pool used by the second access device includes a common type, an exceptional type, or a dedicated type.

The common type includes a common receive type and a common transmit type.

In other words, a common resource pool includes a common resource pool used for sending and a common resource pool used for receiving.

Optionally, the first resource indication information includes information about at least one of the following parameters: a cell identifier corresponding to the resource pool used by the second access device, a zone identifier corresponding to the resource pool used by the second access device, a sidelink subframe corresponding to the resource pool used by the second access device, a start resource block corresponding to the resource pool used by the second access device, a quantity of subchannels corresponding to the resource pool used by the second access device, and a size of a subchannel corresponding to the resource pool used by the second access device.

Optionally, the first resource indication information is used to indicate a use manner of the resource pool used by the second access device, and the use manner of the resource pool used by the second access device includes sending or receiving.

In other words, the first resource indication information is used to indicate whether the resource pool used by the second access device is of a common receive type or a common transmit type.

Optionally, the resource pool used by the second access device includes an initial resource pool configured by the second access device, or the second resource pool includes an updated resource pool obtained after the second access device updates the initial resource pool.

Optionally, the method further includes: The first access device detects whether there is an overlapping part between a resource pool used by the first access device and the resource pool used by the second access device.

Optionally, the method further includes: The first access device detects whether there is an overlapping part between resource pools used by a plurality of second access devices.

Optionally, when there is the overlapping part between the resource pool used by the first access device and the resource pool used by the second access device, the method further includes: The first access device updates the used resource pool, so that an updated resource pool does not include the overlapping part.

Optionally, when there is the overlapping part between the resource pool used by the first access device and the resource pool used by the second access device, the method further includes: The first access device sends related information of the overlapping part to the second access device.

Optionally, when there is an overlapping part between resource pools used by at least two second access devices, the method further includes: The first access device sends related information of the overlapping part to at least one second access device using the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

Optionally, the method further includes: The first access device sends second resource indication information to the second access device or an access management device, where the second resource indication information is used to indicate a resource pool used by the first access device.

Optionally, the first access device includes a distributed unit DU.

Optionally, the first access device includes a centralized unit CU.

According to a third aspect, a wireless communications method is provided. The method includes: A first device receives configuration information sent by a first access device, where the configuration information is used to indicate at least one resource pool used for inter-device communication, and the resource pool includes a plurality of resources autonomously selected by the first device; and the first device sends a measurement report to the first access device, where the measurement report includes an index of a candidate resource in the resource pool.

That "the resource pool includes a resource autonomously selected by the first device" may be understood as that the resource pool includes a resource used in an autonomous selection mode (which may also be referred to as mode4 or mode2).

In the conventional technology, for a resource used in autonomous selection mode (mode4 or mode2), a communications device (for example, a terminal device) does not report, to an access device, a measurement report for the resource used in autonomous selection mode (mode4 or mode2), and therefore the access device cannot evaluate resource interference. Consequently, communications reliability and user experience severely affected.

In contrast, according to the solution in this application, a terminal device reports a measurement report for a resource used in autonomous selection mode (mode4 or mode2), and therefore an access device can evaluate resource interference based on the measurement report. This can improve communications reliability and improve user experience.

Optionally, the measurement report further includes at least one of the following information: a first threshold used by the first device for selecting the candidate resource, a priority of the candidate resource, signal quality of the candidate resource, a type of the resource pool to which the candidate resource belongs, and a communications status in which the first device selects the candidate resource. The type of the resource pool includes a common type, an exceptional type, or a dedicated type, and the communications status includes a connected state, a non-connected state, or a radio link failure state.

The common type includes a common receive type and a common transmit type.

In other words, a common resource pool includes a common resource pool used for sending and a common resource pool used for receiving.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the first threshold includes a priority threshold, and the candidate resource is a resource whose priority is less than or equal to the priority threshold in the resource pool, where the priority threshold includes a basic priority threshold, or the priority threshold includes a basic priority threshold and a threshold obtained after the basic priority threshold is adjusted P1 times.

Optionally, the first threshold includes a signal quality threshold, and the candidate resource is a resource whose signal quality is less than or equal to the signal quality threshold in the resource pool, where the signal quality threshold includes a basic signal quality threshold, or the priority threshold includes a basic signal quality threshold and a threshold obtained after the basic signal quality threshold is adjusted P2 times.

Optionally, the method further includes: The first device receives update information sent by the first access device, where the update information is used to indicate an updated basic threshold, and the updated basic threshold is obtained through updating by the first access device based on the measurement report.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the resource pool includes a resource scheduled by the first access device for the first device.

Optionally, the measurement report is recorded in a minimization of drive test log of the first device.

Optionally, the measurement report is recorded in mobility history information of the first device.

Optionally, the first access device includes a distributed unit DU.

Optionally, the first access device includes a centralized unit CU.

Optionally, the measurement report is periodically sent by the first device.

Optionally, the measurement report is sent by the first device after the first device determines that a preset first event occurs.

According to a fourth aspect, a wireless communications method is provided. The method includes: A first access device sends configuration information to a first device, where the configuration information is used to indicate at least one resource pool used for inter-device communication, and the resource pool includes a plurality of resources autonomously selected by the first device; and the first access device receives a measurement report sent by the first device, where the measurement report includes an index of a candidate resource in the resource pool.

In the conventional technology, for a resource used in autonomous selection mode (mode4 or mode2), a communications device (for example, a terminal device) does not report, to an access device, a measurement report for the resource used in autonomous selection mode (mode4 or mode2), and therefore the access device cannot evaluate resource interference. Consequently, communications reliability and user experience severely affected.

In contrast, according to the solution in this application, a terminal device reports a measurement report for a resource used in autonomous selection mode (mode4 or mode2), and therefore an access device can evaluate resource interference based on the measurement report. This can improve communications reliability and improve user experience.

Optionally, the measurement report further includes at least one of the following information: a first threshold used by the first device for selecting the candidate resource, a priority of the candidate resource, signal quality of the candidate resource, a type of the resource pool to which the candidate resource belongs, and a communications status in which the terminal device selects the candidate resource. The type of the resource pool includes a common type, an exceptional type, or a dedicated type, and the communications status includes a connected state, a non-connected state, or a radio link failure state.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the method further includes: The first access device updates the basic threshold based on the measurement report; and the first access device sends update information to the first device, where the update information is used to indicate an updated basic threshold.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the method further includes: The first access device determines a scheduling mode of the terminal device based on the measurement report.

Optionally, the method further includes: The first access device receives first resource indication information sent by a second access device, where the first resource indication information is used to indicate a resource pool used by the second access device; and the first access device updates, based on the first resource indication information, a resource pool used by the first access device.

Optionally, the method further includes: The first access device sends second resource indication information to the second access device or an access management device, where the second resource indication information is used to indicate a resource pool used by the first access device.

Optionally, the first access device includes a distributed unit DU.

Optionally, the first access device includes a centralized unit CU.

According to a fifth aspect, a wireless communications method is provided. The method includes: A first access device sends configuration information to a first device, where the configuration information is used to indicate a first resource pool used for inter-device communication; the first access device receives resource indication information sent by at least one second access device, where the resource indication information is used to indicate a second resource pool, and the second resource pool is a resource pool that is configured by the second access device for a second device for inter-device communication; and the first access device detects whether there is an overlapping part between the first resource pool and the second resource pool, or the first access device detects whether there is an overlapping part between a plurality of second resource pools, where the plurality of second resource pools are in a one-to-one correspondence with a plurality of second access devices, and each second resource pool is a resource pool configured by a corresponding second access device.

According to the solution provided in this application, a plurality of access devices negotiate a resource pool used for inter-device communication, so that resource pools of the access devices can be prevented from overlapping. This can prevent interference to communication between the devices, improve communications reliability, and improve user experience.

Optionally, the resource indication information is used to indicate a type of the second resource pool, and the type of the second resource pool includes a common type, an exceptional type, or a dedicated type.

The common type includes a common receive type and a common transmit type.

In other words, a common resource pool includes a common resource pool used for sending and a common resource pool used for receiving.

Optionally, the resource indication information includes information about at least one of the following parameters: a cell identifier corresponding to the second resource pool, a zone identifier corresponding to the second resource pool, a sidelink subframe corresponding to the second resource pool, a start resource block corresponding to the second resource pool, a quantity of subchannels corresponding to the second resource pool, and a size of a subchannel corresponding to the second resource pool.

Optionally, the resource indication information is used to indicate a use manner of the second resource pool, and the use manner of the second resource pool includes sending or receiving.

In other words, the resource indication information is used to indicate whether the second resource pool is of a common receive type or a common transmit type.

Optionally, the second resource pool includes an initial resource pool configured by the second access device, or the second resource pool includes an updated resource pool obtained after the second access device updates the initial resource pool.

Optionally, when there is the overlapping part between the first resource pool and the second resource pool, the method further includes: The first access device updates the first resource pool, so that an updated first resource pool does not include the overlapping part.

Optionally, when there is the overlapping part between the first resource pool and the second resource pool, the method further includes: The first access device sends related information of the overlapping part to the second access device.

Optionally, when there is an overlapping part between at least two second resource pools, the method further includes: The first access device sends related information of the overlapping part to at least one second access device using the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

According to a sixth aspect, a wireless communications method is provided. The method includes: A second access device sends configuration information to a second device, where the configuration information is used to indicate a second resource pool used for inter-device communication; and the second access device sends resource indication information to a first access device, where the resource indication information is used to indicate the second resource pool.

According to the solution provided in this application, a plurality of access devices negotiate a resource pool used for inter-device communication, so that resource pools of the access devices can be prevented from overlapping. This can prevent interference to communication between the devices, improve communications reliability, and improve user experience.

Optionally, the resource indication information is used to indicate a type of the second resource pool, and the type of the second resource pool includes a common type, an exceptional type, or a dedicated type.

The common type includes a common receive type and a common transmit type.

In other words, a common resource pool includes a common resource pool used for sending and a common resource pool used for receiving.

Optionally, the resource indication information includes information about at least one of the following parameters: a cell identifier corresponding to the second resource pool, a zone identifier corresponding to the second resource pool, a sidelink subframe corresponding to the second resource pool, a start resource block corresponding to the second resource pool, a quantity of subchannels corresponding to the second resource pool, and a size of a subchannel corresponding to the second resource pool.

Optionally, the resource indication information is used to indicate a use manner of the second resource pool, and the use manner of the second resource pool includes sending or receiving.

In other words, the resource indication information is used to indicate whether the second resource pool is of a common receive type or a common transmit type.

Optionally, the second resource pool includes an initial resource pool configured by the second access device, or the second resource pool includes an updated resource pool obtained after the second access device updates the initial resource pool.

Optionally, the method further includes: The second access device receives related information of an overlapping part that is sent by the first access device, where the overlapping part is an overlapping part between a first resource pool and the second resource pool, or the overlapping part is an overlapping part between the second resource pool and a third resource pool, the first resource pool is a resource pool that is configured by the first access device for a first device for inter-device communication, and the third resource pool is a resource pool that is configured by a third access device for a third device for inter-device communication; and the second access device updates the second resource pool based on the related information of the overlapping part, so that an updated second resource pool does not include the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

According to a seventh aspect, a wireless communications method is provided. The method includes: A first access device sends first configuration information to a first device, where the first configuration information is used to indicate a first resource pool used for inter-device communication; a second access device sends second configuration information to a second device, where the second configuration information is used to indicate a second resource pool used for inter-device communication; the second access device sends resource indication information to the first access device, where the resource indication information is used to indicate the second resource pool; and when there is an overlapping part between the first resource pool and the second resource pool, the first access device updates the first resource pool, so that an updated first resource pool does not include the overlapping part; or when there is an overlapping part between the first resource pool and the second resource pool, the first access device sends related information of the overlapping part to the second access device, and the second access device updates the second resource pool, so that an updated second resource pool does not include the overlapping part.

According to the solution provided in this application, a plurality of access devices negotiate a resource pool used for inter-device communication, so that resource pools of the access devices can be prevented from overlapping. This can prevent interference to communication between the devices, improve communications reliability, and improve user experience.

Optionally, the resource indication information is used to indicate a type of the second resource pool, and the type of the second resource pool includes a common type, an exceptional type, or a dedicated type.

The common type includes a common receive type and a common transmit type.

In other words, a common resource pool includes a common resource pool used for sending and a common resource pool used for receiving.

Optionally, the resource indication information includes information about at least one of the following parameters: a cell identifier corresponding to the second resource pool, a zone identifier corresponding to the second resource pool, a sidelink subframe corresponding to the second resource pool, a start resource block corresponding to the second resource pool, a quantity of subchannels corresponding to the second resource pool, and a size of a subchannel corresponding to the second resource pool.

Optionally, the resource indication information is used to indicate a use manner of the second resource pool, and the use manner of the second resource pool includes sending or receiving.

In other words, the resource indication information is used to indicate whether the second resource pool is of a common receive type or a common transmit type.

Optionally, the second resource pool includes an initial resource pool configured by the second access device, or the second resource pool includes an updated resource pool obtained after the second access device updates the initial resource pool.

Optionally, the related information of the overlapping part is used to indicate a type of a resource pool to which the overlapping part belongs, and the type includes a common type, an exceptional type, or a dedicated type.

The common type includes a common receive type and a common transmit type.

In other words, a common resource pool includes a common resource pool used for sending and a common resource pool used for receiving.

Optionally, the related information of the overlapping part is used to indicate a use manner of a resource pool to which the overlapping part belongs, and the use manner of the resource pool to which the overlapping part belongs includes sending or receiving.

In other words, the related information of the overlapping part is used to indicate whether the resource pool to which the overlapping part belongs is of a common receive type or a common transmit type.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

According to an eighth aspect, a wireless communications apparatus is provided. The apparatus includes: a transceiver unit, configured to receive configuration information from a first access device, where the configuration information is used to indicate at least one resource pool used for inter-device communication, and the resource pool includes a plurality of resources; and a processing unit, configured to determine a candidate resource from the plurality of resources. The transceiver unit is further configured to send a measurement report to the first access device, where the measurement report includes an index of a candidate resource in the resource pool and at least one of the following information: a first threshold used when a first device selects the candidate resource, a priority of the candidate resource, signal quality of the candidate resource, a type of the resource pool to which the candidate resource belongs, and a communications status in which the first device selects the candidate resource, where the type of the resource pool includes a common type, an exceptional type, or a dedicated type, and the communications status includes a connected state, a non-connected state, or a radio link failure state; and the candidate resource includes one or more resources.

The apparatus is configured in or is the first device.

According to the solution in this application, a measurement report reported by a terminal device includes auxiliary information, and the auxiliary information may include at least one of the following information: the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes the connected state, the non-connected state, or the radio link failure state. Therefore, an access device can evaluate resource interference more accurately based on the auxiliary information. This can effectively optimize a communications parameter and improve user experience.

Optionally, the transceiver unit is further configured to receive update information sent by the first access device, where the update information is used to indicate an updated basic threshold, and the updated basic threshold is obtained through updating by the first access device based on the measurement report.

According to the solution in this application, an access device updates a basic threshold based on a measurement report, so that a measurement result obtained by a terminal device based on an updated basic threshold can better adapt to an interference status. This can further improve communications reliability and improve user experience.

The units in the apparatus are separately configured to perform the steps of the communications method according to the first aspect and the implementations of the first aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to a ninth aspect, a wireless communications apparatus is provided. The apparatus includes: a processing unit, configured to configure, for a first device, at least one resource pool used for inter-device communication, and the resource pool includes a plurality of resources; and a transceiver unit, configured to: send configuration information to the first device, where the configuration information is used to indicate the resource pool; and receive a measurement report sent by the first device, where the measurement report includes an index of a candidate resource in the resource pool and at least one of the following information: a first threshold used by the first device for selecting the candidate resource, a priority of the candidate resource, signal quality of the candidate resource, a type of the resource pool to which the candidate resource belongs, and a communications status in which the terminal device selects the candidate resource, where the type of the resource pool includes a common type, an exceptional type, or a dedicated type, and the communications status includes a connected state, a non-connected state, or a radio link failure state.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the processing unit is further configured to update the basic threshold based on the measurement report; and the first access device sends update information to the first device, where the update information is used to indicate an updated basic threshold.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the processing unit is further configured to determine a scheduling mode of the terminal device based on the measurement report.

Optionally, the transceiver unit is further configured to receive first resource indication information sent by at least one second access device, where the first resource indication information is used to indicate a resource pool used by the second access device.

Optionally, the first resource indication information is used to indicate a type of the resource pool used by the second access device, and the type of the resource pool used by the second access device includes a common type, an exceptional type, or a dedicated type.

The common type includes a common receive type and a common transmit type.

In other words, a common resource pool includes a common resource pool used for sending and a common resource pool used for receiving.

Optionally, the first resource indication information includes information about at least one of the following parameters: a cell identifier corresponding to the resource pool used by the second access device, a zone identifier corresponding to the resource pool used by the second access device, a sidelink subframe corresponding to the resource pool used by the second access device, a start resource block corresponding to the resource pool used by the second access device, a quantity of subchannels corresponding to the resource pool used by the second access device, and a size of a subchannel corresponding to the resource pool used by the second access device.

Optionally, the first resource indication information is used to indicate a use manner of the resource pool used by the second access device, and the use manner of the resource pool used by the second access device includes sending or receiving.

In other words, the first resource indication information is used to indicate whether the resource pool used by the second access device is of a common receive type or a common transmit type.

Optionally, the resource pool used by the second access device includes an initial resource pool configured by the second access device, or the second resource pool includes an updated resource pool obtained after the second access device updates the initial resource pool.

Optionally, the processing unit is further configured to detect whether there is an overlapping part between a resource pool used by the first access device and the resource pool used by the second access device.

Optionally, the processing unit is further configured to detect whether there is an overlapping part between resource pools used by a plurality of second access devices.

Optionally, when there is the overlapping part between the resource pool used by the first access device and the resource pool used by the second access device, the processing unit is further configured to update the used resource pool, so that an updated resource pool does not include the overlapping part.

Optionally, when there is the overlapping part between the resource pool used by the first access device and the resource pool used by the second access device, the transceiver unit is further configured to send related information of the overlapping part to the second access device.

Optionally, when there is an overlapping part between resource pools used by at least two second access devices, the transceiver unit is further configured to send related information of the overlapping part to at least one second access device using the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

Optionally, the transceiver unit is further configured to send second resource indication information to the second access device or an access management device, where the second resource indication information is used to indicate a resource pool used by the first access device.

Optionally, the apparatus is configured in or is a distributed unit DU.

Optionally, the apparatus is configured in or is a centralized unit CU.

The units in the apparatus are separately configured to perform the steps of the communications method according to the second aspect and the implementations of the second aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to a tenth aspect, a wireless communications apparatus is provided. The apparatus includes: a transceiver unit, configured to receive configuration information sent by a first access device, where the configuration information is used to indicate at least one resource pool used for inter-device communication, and the resource pool includes a plurality of resources autonomously selected by the first device; and a processing unit, configured to measure the resource pool to determine at least one candidate resource. The transceiver unit is further configured to send a measurement report to the first access device, where the measurement report includes an index of a candidate resource in the resource pool.

That "the resource pool includes a resource autonomously selected by the first device" may be understood as that the resource pool includes a resource used in an autonomous selection mode (which may also be referred to as mode4 or mode2).

In the conventional technology, for a resource used in autonomous selection mode (mode4 or mode2), a communications device (for example, a terminal device) does not report, to an access device, a measurement report for the resource used in autonomous selection mode (mode4 or mode2), and therefore the access device cannot evaluate resource interference. Consequently, communications reliability and user experience severely affected.

In contrast, according to the solution in this application, a terminal device reports a measurement report for a resource used in autonomous selection mode (mode4 or mode2), and therefore an access device can evaluate resource interference based on the measurement report. This can improve communications reliability and improve user experience.

Optionally, the measurement report further includes at least one of the following information: a first threshold used by the first device for selecting the candidate resource, a priority of the candidate resource, signal quality of the candidate resource, a type of the resource pool to which the candidate resource belongs, and a communications status in which the first device selects the candidate resource. The type of the resource pool includes a common type, an exceptional type, or a dedicated type, and the communications status includes a connected state, a non-connected state, or a radio link failure state.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the transceiver unit is further configured to receive update information sent by the first access device, where the update information is used to indicate an updated basic threshold, and the updated basic threshold is obtained through updating by the first access device based on the measurement report.

According to the solution in this application, an access device updates a basic threshold based on a measurement report, so that a measurement result obtained by a terminal device based on an updated basic threshold can better adapt to an interference status. This can further improve communications reliability and improve user experience.

The units in the apparatus are separately configured to perform the steps of the communications method according to the third aspect and the implementations of the third aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to an eleventh aspect, a wireless communications apparatus is provided. The apparatus includes: a processing unit, configured to configure, for a first device, at least one resource pool used for inter-device communication, where the resource pool includes a plurality of resources autonomously selected by the first device; and a transceiver unit, configured to send configuration information to the first device, where the configuration information is used to indicate the resource pool. The transceiver unit is further configured to receive a measurement report sent by the first device, where the measurement report includes an index of a candidate resource in the resource pool.

That "the resource pool includes a resource autonomously selected by the first device" may be understood as that the resource pool includes a resource used in an autonomous selection mode (which may also be referred to as mode4 or mode2).

In the conventional technology, for a resource used in autonomous selection mode (mode4 or mode2), a communications device (for example, a terminal device) does not report, to an access device, a measurement report for the resource used in autonomous selection mode (mode4 or mode2), and therefore the access device cannot evaluate resource interference. Consequently, communications reliability and user experience severely affected.

In contrast, according to the solution in this application, a terminal device reports a measurement report for a resource used in autonomous selection mode (mode4 or mode2), and therefore an access device can evaluate resource interference based on the measurement report. This can improve communications reliability and improve user experience.

Optionally, the measurement report further includes at least one of the following information: a first threshold used by the first device for selecting the candidate resource, a priority of the candidate resource, signal quality of the candidate resource, a type of the resource pool to which the candidate resource belongs, and a communications status in which the terminal device selects the candidate resource. The type of the resource pool includes a common type, an exceptional type, or a dedicated type, and the communications status includes a connected state, a non-connected state, or a radio link failure state.

According to the solution in this application, a measurement report reported by a terminal device includes auxiliary information, and the auxiliary information may include the first threshold used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

Optionally, the processing unit is configured to update the basic threshold based on the measurement report; and the first access device sends update information to the first device, where the update information is used to indicate an updated basic threshold.

According to the solution in this application, an access device updates a basic threshold based on a measurement report, so that a measurement result obtained by a terminal device based on an updated basic threshold can better adapt to an interference status. This can further improve communications reliability and improve user experience.

Optionally, the transceiver unit is further configured to receive first resource indication information sent by a second access device, where the first resource indication information is used to indicate a resource pool used by the second access device. The apparatus further includes a processing unit, configured to update, based on the first resource indication information, a resource pool used by the first access device.

Optionally, the transceiver unit is further configured to send second resource indication information to the second access device or an access management device, where the second resource indication information is used to indicate a resource pool used by the first access device.

The units in the apparatus are separately configured to perform the steps of the communications method according to the fourth aspect and the implementations of the fourth aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to a twelfth aspect, a wireless communications apparatus is provided. The apparatus includes: a transceiver unit, configured to: send configuration information to a first device, where the configuration information is used to indicate a first resource pool used for inter-device communication; and receive resource indication information sent by at least one second access device, where the resource indication information is used to indicate a second resource pool, and the second resource pool is a resource pool that is configured by the second access device for a second device for inter-device communication; and a processing unit, configured to detect whether there is an overlapping part between the first resource pool and the second resource pool, or detect whether there is an overlapping part between a plurality of second resource pools, where the plurality of second resource pools are in a one-to-one correspondence with a plurality of second access devices, and each second resource pool is a resource pool configured by a corresponding second access device.

According to the solution provided in this application, a plurality of access devices negotiate a resource pool used for inter-device communication, so that resource pools of the access devices can be prevented from overlapping. This can prevent interference to communication between the devices, improve communications reliability, and improve user experience.

Optionally, the resource indication information is used to indicate a type of the second resource pool, and the type of the second resource pool includes a common type, an exceptional type, or a dedicated type.

The common type includes a common receive type and a common transmit type.

In other words, a common resource pool includes a common resource pool used for sending and a common resource pool used for receiving.

Optionally, the resource indication information includes information about at least one of the following parameters: a cell identifier corresponding to the second resource pool, a zone identifier corresponding to the second resource pool, a sidelink subframe corresponding to the second resource pool, a start resource block corresponding to the second resource pool, a quantity of subchannels corresponding to the second resource pool, and a size of a subchannel corresponding to the second resource pool.

Optionally, the resource indication information is used to indicate a use manner of the second resource pool, and the use manner of the second resource pool includes sending or receiving.

In other words, the resource indication information is used to indicate whether the second resource pool is of a common receive type or a common transmit type.

Optionally, the second resource pool includes an initial resource pool configured by the second access device, or the second resource pool includes an updated resource pool obtained after the second access device updates the initial resource pool.

Optionally, when there is the overlapping part between the first resource pool and the second resource pool, the processing unit is further configured to update the first resource pool, so that an updated first resource pool does not include the overlapping part.

Optionally, when there is the overlapping part between the first resource pool and the second resource pool, the transceiver unit is further configured to send related information of the overlapping part to the second access device.

Optionally, when there is an overlapping part between at least two second resource pools, the transceiver unit is further configured to send related information of the overlapping part to at least one second access device using the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

The units in the apparatus are separately configured to perform the steps of the communications method according to the fifth aspect and the implementations of the fifth aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to a thirteenth aspect, a wireless communications apparatus is provided. The apparatus includes: a transceiver unit, configured to send configuration information to a second device, where the configuration information is used to indicate a second resource pool used for inter-device communication; and send resource indication information to a first access device, where the resource indication information is used to indicate the second resource pool.

According to the solution provided in this application, a plurality of access devices negotiate a resource pool used for inter-device communication, so that resource pools of the access devices can be prevented from overlapping. This can prevent interference to communication between the devices, improve communications reliability, and improve user experience.

Optionally, the resource indication information is used to indicate a type of the second resource pool, and the type of the second resource pool includes a common type, an exceptional type, or a dedicated type.

The common type includes a common receive type and a common transmit type.

In other words, a common resource pool includes a common resource pool used for sending and a common resource pool used for receiving.

Optionally, the resource indication information includes information about at least one of the following parameters: a cell identifier corresponding to the second resource pool, a zone identifier corresponding to the second resource pool, a sidelink subframe corresponding to the second resource pool, a start resource block corresponding to the second resource pool, a quantity of subchannels corresponding to the second resource pool, and a size of a subchannel corresponding to the second resource pool.

Optionally, the resource indication information is used to indicate a use manner of the second resource pool, and the use manner of the second resource pool includes sending or receiving.

In other words, the resource indication information is used to indicate whether the second resource pool is of a common receive type or a common transmit type.

Optionally, the second resource pool includes an initial resource pool configured by the second access device, or the second resource pool includes an updated resource pool obtained after the second access device updates the initial resource pool.

Optionally, the transceiver unit is further configured to receive related information of an overlapping part that is sent by the first access device, where the overlapping part is an overlapping part between a first resource pool and the second resource pool, or the overlapping part is an overlapping part between the second resource pool and a third resource pool, the first resource pool is a resource pool that is configured by the first access device for a first device for inter-device communication, and the third resource pool is a resource pool that is configured by a third access device for a third device for inter-device communication. The apparatus further includes a processing unit, configured to update the second resource pool based on the related information of the overlapping part, so that an updated second resource pool does not include the overlapping part.

Optionally, the related information of the overlapping part includes information about at least one of the following parameters: a cell identifier corresponding to the overlapping part, a zone identifier corresponding to the overlapping part, a sidelink subframe corresponding to the overlapping part, a start resource block corresponding to the overlapping part, a quantity of subchannels corresponding to the overlapping part, and a size of a subchannel corresponding to the overlapping part.

The units in the apparatus are separately configured to perform the steps of the communications method according to the sixth aspect and the implementations of the sixth aspect.

In a design, the apparatus is a communications chip. The communications chip may include an input circuit or interface configured to send information or data, and an output circuit or interface configured to receive information or data.

In another design, the apparatus is a communications device. The communications device may include a transmitter configured to send information or data, and a receiver configured to receive information or data.

According to a fourteenth aspect, a communications device is provided. The device includes a processor and a memory. The memory is configured to store a computer program, and the processor is configured to invoke the computer program from the memory and run the computer program, so that the communications device performs the communications method according to any one of the first aspect to the sixth aspect and the possible implementations thereof.

Optionally, there are one or more processors, and there are one or more memories.

Optionally, the memory may be integrated with the processor, or the memory and the processor are separately disposed.

Optionally, the terminal device further includes a transmitter (transmitting machine) and a receiver (receiving machine).

According to a fifteenth aspect, a communications system is provided. The system includes the communications device according to the fourteenth aspect.

In a possible design, the communications system may further include another device interacting with the communications device in the solutions provided in the embodiments of this application.

According to a sixteenth aspect, a communications system is provided. The system includes a first access device, a first device, a second access device, and a second device.

Optionally, the communications system is a vehicle to everything V2X system.

The first access device is configured to indicate the method according to the implementations of the first aspect or the fifth aspect, the second access device is configured to indicate the method according to the implementations of the sixth aspect, the second access device is configured to indicate the method according to the implementations of the sixth aspect, and the first device is configured to indicate the method according to the implementations of the second aspect.

In a possible design, the communications system may further include another device interacting with the communications device in the solutions provided in the embodiments of this application.

According to a seventeenth aspect, a computer program product is provided. The computer program product includes a computer program (which may also be referred to as code or instructions). When the computer program is run, a computer is enabled to perform the method according to any one of the first aspect to the sixth aspect and the possible implementations thereof.

According to an eighteenth aspect, a computer-readable medium is provided. The computer-readable medium stores a computer program (which may also be referred to as code or instructions). When the computer program is run on a computer, the computer is enabled to perform the method according to any one of the first aspect to the sixth aspect and the possible implementations thereof.

According to a nineteenth aspect, a chip system is provided. The system includes a memory and a processor. The memory is configured to store a computer program, and the processor is configured to invoke the computer program from the memory and run the computer program, so that a communications device on which the chip system is installed performs the method according to any one of the first aspect to the sixth aspect and the possible implementations thereof.

The chip system may include an input circuit or interface configured to send information or data, and an output circuit or interface configured to receive information or data.

### BRIEF DESCRIPTION OF DRAWINGS

FIG. 1 is a schematic structural diagram of an example of a communications system according to this application;
FIG. 2 is a schematic structural diagram of an example of an access device according to this application;
FIG. 3 is a schematic structural diagram of another example of an access device according to this application;
FIG. 4 is a schematic structural diagram of another example of a communications system according to this application;
FIG. 5 is a schematic interaction diagram of an example of a wireless communications process according to this application;
FIG. 6 is a schematic interaction diagram of another example of a wireless communications process according to this application;
FIG. 7 is a schematic interaction diagram of another example of a wireless communications process according to this application;
FIG. 8 is a schematic block diagram of an example of a wireless communications apparatus according to this application;
FIG. 9 is a schematic block diagram of another example of a wireless communications apparatus according to this application;
FIG. 10 is a schematic structural diagram of an example of a terminal device according to this application; and
FIG. 11 is a schematic structural diagram of an example of an access device according to this application.

### DESCRIPTION OF EMBODIMENTS

The following describes technical solutions in this application with reference to the accompanying drawings.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a future 5th generation (5th generation, 5G) system, or a new radio (new radio, NR) system.

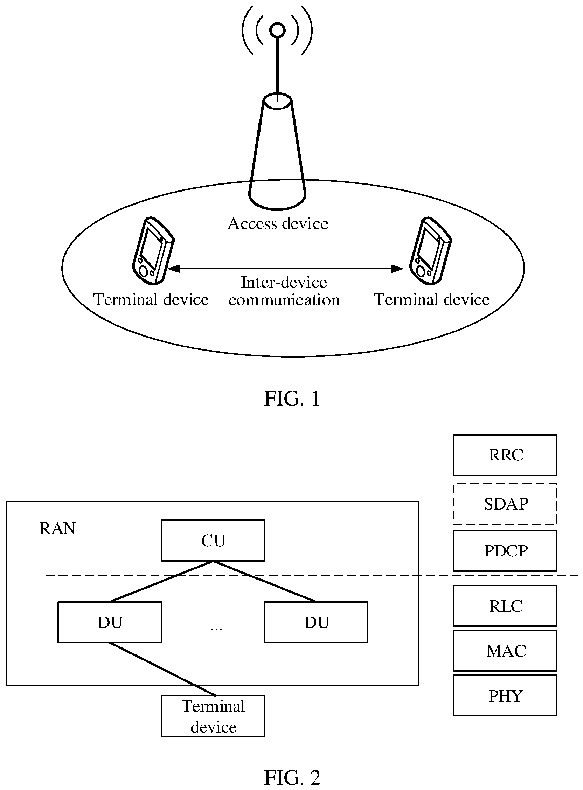

FIG. 1 is a schematic diagram of a network architecture according to an embodiment of this application. As shown in FIG. 1, a communications system in this application may include an access device and a plurality of terminal devices, and two terminal devices may communicate with each other by using a resource pool configured by the access device.

A terminal device in the embodiments of this application may also be referred to as user equipment (user equipment, UE), a mobile station (mobile station, MS), a mobile terminal (mobile terminal, MT), an access terminal, a subscriber unit, a subscriber station, a mobile console, a remote station, a remote terminal, a mobile device, a user terminal, a terminal, a wireless communications device, a user agent, a user apparatus, or the like.

The terminal device may be a device that provides a user with voice/data connectivity, for example, a handheld device or a vehicle-mounted device having a wireless connection function. Currently, examples of some terminals are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communications function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in the embodiments of this application.

By way of example and not limitation, in the embodiments of this application, the terminal device may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user. The wearable device is not merely a hardware device, but is used to implement a powerful function through software support, data interaction, and cloud interaction. Generalized wearable intelligent devices include full-featured and large-size devices, such as smart watches or smart glasses, that can implement complete or partial functions without depending on smartphones, and devices, such as various smart bands or smart jewelry for monitoring physical signs, that focus on only one type of application functions and need to work with other devices such as smartphones.

In addition, the terminal device in the embodiments of this application may alternatively be a terminal device in an internet of things (internet of things, IoT) system. IoT is an important part of development of future information technologies. A main technical feature of the IoT is to connect an object to a network by using a communications technology, to implement an intelligent network of human-machine interconnection and thing-thing interconnection.

In the embodiments of this application, massive connections, deep coverage, and terminal power saving may be implemented by using, for example, a narrowband (narrow band) NB technology in an IoT technology. For example, the NB may include only one resource block (resource block, RB). In other words, a bandwidth of the NB is only 180 KB. To implement massive access, terminals are required to be discrete in access. According to a communications method in the embodiments of this application, a congestion problem that occurs when massive terminals access a network through the NB in the IoT technology can be effectively resolved.

In addition, an access device in the embodiments of this application may be a device configured to communicate with a terminal device, and the access device may also be referred to as an access network device or a radio access network device. For example, the access device may be an evolved NodeB (evolved NodeB, eNB or eNodeB) in an LTE system, or may be a radio controller in a cloud radio access network (cloud radio access network, CRAN) scenario, or may be a relay station, an access point, a vehicle-mounted device, a wearable device, an access device in a future 5G network, or an access device in a future evolved PLMN, or may be an access point (access point, AP) in a WLAN, or may be a gNB in a new radio (new radio, NR) system. This is not limited in the embodiments of this application.

In addition, in the embodiments of this application, the access device is a device in a RAN, that is, a RAN node accessed by the terminal device through a wireless network. For example, by way of example and not limitation, the access device may be a gNB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home evolved NodeB (for example, a home evolved NodeB or a home Node B, HNB), a baseband unit (baseband unit, BBU), or a wireless fidelity (wireless fidelity, Wi-Fi) access point (access point, AP). In a network structure, a network device may include a centralized unit (centralized unit, CU) node, a distributed unit (distributed unit, DU) node, a RAN device including a CU node and a DU node, or a RAN device including a control plane CU node (CU-CP node), a user plane CU node (CU-UP node), and a DU node.

The access device serves a cell. The terminal device communicates with the access device by using a transmission resource (for example, a frequency domain resource or a spectrum resource) used for the cell. The cell may be a cell corresponding to the access device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and a low transmit power, and are suitable for providing a high-rate data transmission service.

In addition, a plurality of cells may simultaneously work in a same frequency band on a carrier in the LTE system or the 5G system. In some special scenarios, it may be considered that a concept of the carrier is equivalent to that of the cell. For example, in a carrier aggregation (carrier aggregation, CA) scenario, both a carrier index of a secondary component carrier and a cell identifier (cell identification, Cell ID) of a secondary cell that works on the secondary component carrier are carried when the secondary component carrier is configured for UE. In this case, it may be considered that the concept of the carrier is equivalent to that of the cell. For example, that the terminal device accesses a carrier is equivalent to that the terminal device accesses a cell.

The communications system in this application may be further applicable to a vehicle to everything (vehicle to everything, V2X) technology. To be specific, the terminal device in this application may alternatively be a vehicle, for example, an intelligent vehicle or a self-driving vehicle.

Herein, "X" in V2X represents different communications targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In V2X, an access device may configure a "zone (zone)" for UE. The zone may also be referred to as a geographical area. After the zone configuration, the world is divided into a plurality of zones, and the zones are defined by reference points, lengths, and widths. When determining a zone identifier (identifier, ID), the UE uses a zone length, a zone width, a quantity of zones above the length, a quantity of zones above the width, and a zone reference point to perform a remainder operation. The foregoing information may be configured by the access device.

A V2X service may be provided in two manners: a PC5 interface based manner and a Uu interface based manner. A PC5 interface is an interface defined based on a sidelink (sidelink). Through such an interface, communications devices (for example, vehicles) may directly communicate with each other. The PC5 interface may be used out of coverage (out of coverage, OOC) and in coverage (in coverage, IC), but only an authorized communications device can use the PC5 interface for transmission.

In this application, the V2X sidelink transmission supports two modes: a scheduling mode (which may be referred to as mode3 or mode1) and a UE autonomous resource selection mode (which may be referred to as mode4 or mode2).

In scheduling mode, the UE needs to be in radio resource control (radio resource control, RRC) connected state. In a scheduling process, the UE first requests a resource from an access device (for example, an eNB), and then the access device allocates control and data resources on the V2X sidelink. By way of example and not limitation, in this application, scheduling in scheduling mode may include semi-persistent scheduling (semi-persistent scheduling, SPS).

In addition, in UE autonomous resource selection mode, the UE selects a transmission resource and autonomously adjusts a format of transmitting control and data on the V2X sidelink.

For example, if a mapping relationship between a "zone (zone)" and a "transmission resource" is configured for the UE, the UE selects a corresponding resource pool based on a zone in which the UE is located. The resource pool may also be referred to as a resource set or a resource group, and one resource pool may include one or more resources, for example, a V2X resource. In addition, the resource pool may be preconfigured by the access device for the UE. In addition, when selecting a resource from the resource pool, the UE uses a sensing (sensing) function. In addition, "sensing" may also be referred to as measurement or detection. Based on a sensing result, the UE selects a resource and reserves a plurality of resources.

In this application, the resource pool may be a resource used for sidelink (sidelink) control information and data transmission.

Optionally, a resource in the resource pool includes at least one of a time domain resource, a frequency domain resource, and a time-frequency domain resource.

For example, the resource may include a resource block (resource block, RB) RB.

For another example, in V2X, the resource may include a subchannel including a plurality of consecutive RBs, and the subchannel may be a minimum unit for sidelink (Sidelink) scheduling/data transmission.

In this application, to assist the access device in configuring a V2X sidelink resource, the UE may report location information to the access device. This reporting may require existing periodic signaling and procedure measurement and reporting.

Specifically, for IC UE, when the UE autonomously selects a resource, the access device may indicate a mapping relationship between a zone and a resource in system information, for example, a system broadcast message (for example, a SIB 19 or a SIB 21). For OOC UE, the mapping relationship is preset. Then, the UE selects a resource corresponding to a location of the UE to perform V2X communication.

In this application, a V2X resource (or resource pool) may include a common (common) resource pool, an exceptional (exceptional) resource pool, and a dedicated (dedicated) resource pool.

By way of example and not limitation, in this application, the common resource pool may be a resource pool used by the UE in connected state (for example, RRC connected state).

The exceptional resource pool may be a resource pool used by the UE in non-connected state (for example, an idle mode, an inactive state (inactive state), or a radio link failure state).

The dedicated resource pool may be a UE-specific resource pool.

In V2X, to control use of a channel, the access device may indicate the UE to adjust a related parameter based on a sensing result. For example, the access device may indicate, based on a channel busy ratio (channel busy ratio, CBR), the UE to adjust a sending parameter and an adjustment mode parameter.

In this application, the UE may periodically report a measurement result.

Alternatively, in this application, the UE may report a measurement result when determining that a preset event occurs.

By way of example and not limitation, in this application, the foregoing event may include but is not limited to the following events:

Event 1: A measured signal strength (reference signal received power, RSRP) of the UE is greater than or equal to a preset threshold a.

Event 2: A measured signal strength of the UE is less than or equal to a preset threshold b.

Event 3: The access device indicates the UE to report a measurement result.

Event 4: Measured signal quality (reference signal received quality, RSRQ) of the UE is greater than or equal to a preset threshold c.

Event 5: Measured signal quality of the UE is less than or equal to a preset threshold d.

Finally, the access device may indicate, by using system information such as the system broadcast message (for example, the SIB 19 or the SIB 21), the UE to send information such as a resource pool, for UE sidelink communication.

FIG. 2 is a schematic diagram of a network architecture according to an embodiment of this application. As shown in FIG. 2, an access device may include a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. For example, in an LTE communications system, a RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between a RAN device and a terminal device complies with a specified protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as the PDCP layer, the RLC layer, the MAC layer, and the physical layer. In an implementation, a service data adaptation protocol (service data adaptation protocol, SDAP) layer is further included above the PDCP layer.

The functions of these protocol layers may be implemented by one node, or may be implemented by a plurality of nodes. For example, in an evolved structure, the RAN device may include a centralized unit (centralized unit, CU) and a distributed unit (distributed unit, DU), and a plurality of DUs may be centrally controlled by one CU.

As shown in FIG. 2, the CU and the DU may be divided based on a protocol layer of a wireless network. For example, functions of the PDCP layer and a protocol layer above the PDCP layer are set on the CU, and functions of protocol layers below the PDCP such as the RLC layer and the MAC layer are set on the DU. In other words, the CU has functions of layers (including the PDCP layer, the RRC layer, and the SDAP layer) above the PDCP layer, and the DU has functions of layers (including the RLC layer, the MAC layer, and the PHY layer) below the PDCP layer.

Division based on the protocol layer is merely an example, and division may alternatively be performed based on another protocol layer such as the RLC layer. Functions of the RLC layer and protocol layers above the RLC layer are set on the CU, and functions of protocol layers below the RLC layer are set on the DU. Alternatively, division is performed at a protocol layer. For example, a part of a function of the RLC layer and functions of protocol layers above the RLC layer are set on the CU, and a remaining function of the RLC layer and functions of protocol layers below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

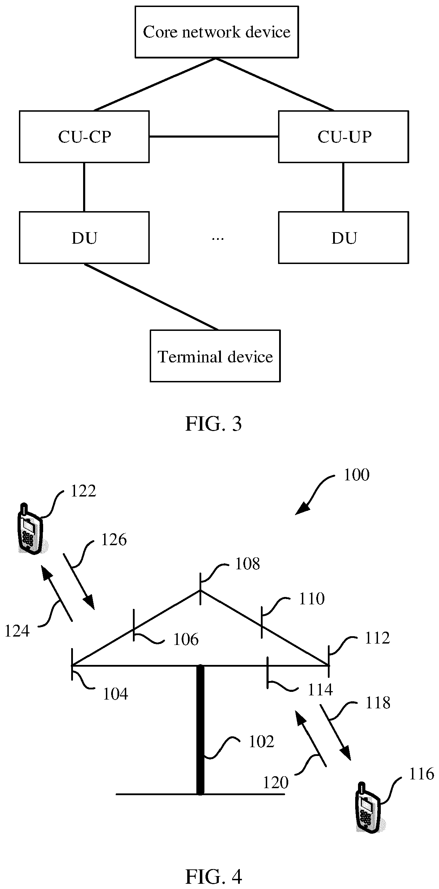

FIG. 3 is another schematic diagram of a network architecture to which an embodiment of this application is applicable. Compared with the architecture shown in FIG. 2, a control plane (CP) and a user plane (UP) of a CU may be further separated into different entities for implementation, and the different entities are a control plane CU entity (CU-CP entity) and a user plane CU entity (CU-UP entity).

In the foregoing network architecture, signaling generated by the CU may be sent to a terminal device by using a DU, or signaling generated by a terminal device may be sent to the CU by using a DU. The DU may transparently transmit the signaling to the terminal device or the CU by directly encapsulating the signaling at a protocol layer without parsing the signaling. In the following embodiments, if transmission of such signaling between the DU and the terminal device is involved, that the DU sends or receives the signaling includes this scenario. For example, signaling at an RRC layer or a PDCP layer is finally processed as signaling at a PHY layer and sent to the terminal device, or is converted from received signaling at the PHY layer. In the architecture, it may also be considered that the signaling at the RRC layer or the PDCP layer is sent by the DU or is sent by the DU and a radio frequency.

In the foregoing embodiments, the CU is classified as a network device on a RAN side. In addition, the CU may alternatively be classified as a network device on a CN side. This is not limited herein.

The apparatus in the following embodiments of this application may be located in a terminal device or a network device based on a function implemented by the apparatus. When the foregoing CU-DU structure is used, the network device may be a CU node, a DU node, or a RAN device including a CU node and a DU node.

FIG. 4 is a schematic diagram of a system 100 to which a communications method according to an embodiment of this application is applicable. As shown in FIG. 4, the system 100 includes an access device 102. The access device 102 may include one or more antennas, for example, antennas 104, 106, 108, 110, 112, and 114. In addition, the access device 102 may additionally include a transmitter chain and a receiver chain. A person of ordinary skill in the art can understand that the transmitter chain and the receiver chain may include a plurality of components (for example, a processor, a modulator, a multiplexer, a demodulator, a demultiplexer, or an antenna) related to signal sending and receiving.

The access device 102 may communicate with a plurality of terminal devices (for example, a terminal device 116 and a terminal device 122). However, it can be understood that the access device 102 may communicate with any quantity of terminal devices that are similar to the terminal device 116 or the terminal device 122. The terminal devices 116 and 122 each may be, for example, a cellular phone, a smartphone, a portable computer, a handheld communications device, a handheld computing device, a satellite radio apparatus, a global positioning system, a PDA, and/or any other suitable device configured to perform communication in the wireless communications system 100.

As shown in FIG. 4, the terminal device 116 communicates with the antennas 112 and 114. The antennas 112 and 114 send information to the terminal device 116 over a forward link (which is also referred to as a downlink) 118, and receive information from the terminal device 116 over a reverse link (which is also referred to as an uplink) 120. In addition, the terminal device 122 communicates with the antennas 104 and 106. The antennas 104 and 106 send information to the terminal device 122 through a forward link 124, and receive information from the terminal device 122 through a reverse link 126.

For example, in a frequency division duplex (frequency division duplex, FDD) system, the forward link 118 and the reverse link 120 may use different frequency bands, and the forward link 124 and the reverse link 126 may use different frequency bands.

For another example, in a time division duplex (time division duplex, TDD) system and a full duplex (full duplex) system, the forward link 118 and the reverse link 120 may use a same frequency band, and the forward link 124 and the reverse link 126 may use a same frequency band.

Each antenna (or antenna group including a plurality of antennas) and/or zone designed for communication are/is referred to as a sector of the access device 102. For example, an antenna group may be designed to communicate with a terminal device in a sector within coverage of the access device 102. The access device may send, through a single antenna or a multi-antenna transmit diversity, signals to all terminal devices in a corresponding sector. In a process in which the access device 102 communicates with the terminal devices 116 and 122 respectively over the forward links 118 and 124, a transmit antenna of the access device 102 may improve signal-to-noise ratios of the forward links 118 and 124 through beamforming. In addition, compared with a manner in which an access device sends, through a single antenna or a multi-antenna transmit diversity, signals to all terminal devices served by the access device, less interference is caused to a mobile device in a neighboring cell when the access device 102 sends signals through beamforming to the terminal devices 116 and 122 that are randomly scattered in the related coverage.

In a given time, the access device 102, the terminal device 116, or the terminal device 122 may be a wireless communications sending apparatus and/or a wireless communications receiving apparatus. During data sending, the wireless communications sending apparatus may encode data for transmission. Specifically, the wireless communications sending apparatus may obtain (for example, generate, receive from another communications apparatus, or store in a memory) a specific quantity of data bits to be sent to the wireless communications receiving apparatus through a channel. The data bits may be included in a transport block (or a plurality of transport blocks) of the data, and the transport block may be segmented to generate a plurality of code blocks.

In addition, the communications system 100 may be a PLMN, a D2D network, an M2M network, an IoT network, or another network. FIG. 4 is merely a simplified schematic diagram used as an example. The network may further include another access device, which is not shown in FIG. 4.

It should be understood that FIG. 1 to FIG. 4 are merely examples for description, and should not constitute any limitation on this application. For example, the communications system may further include a core network device. The core network device may be connected to a plurality of access network devices, and is configured to control the access network devices. In addition, data received from a network side (for example, the internet) may be distributed to the access network devices.

A specific structure of an execution body of a method provided in the embodiments of this application is not particularly limited in the embodiments of this application, provided that a program that records code for the method provided in the embodiments of this application can be run to perform communication according to the method provided in the embodiments of this application. For example, the execution body of the method provided in the embodiments of this application may be a terminal device, a network device, a function module that can invoke and execute the program in a terminal device or a network device, or a component (for example, a chip or a circuit) that may be used in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel and various other media that can store, include, and/or carry instructions and/or data.

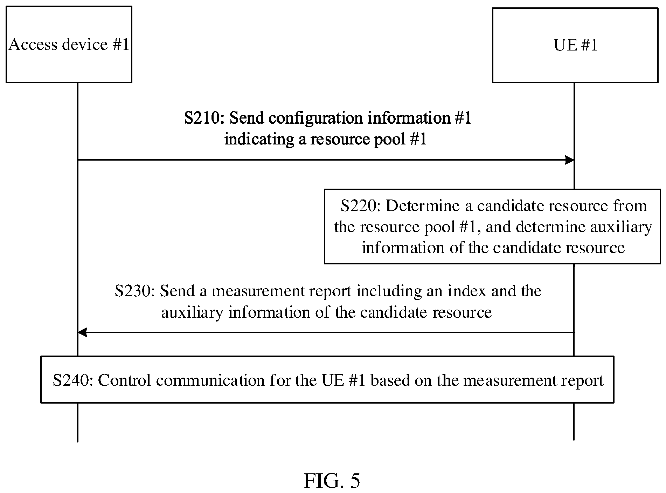

FIG. 5 is a schematic interaction diagram of an example of a wireless communications process according to this application.

As shown in FIG. 5, in S210, an access device #1 (that is, an example of a first access device) may send configuration information #1 to UE #1 (that is, an example of a first device), where the configuration information #1 may be used to indicate a plurality of resource pools that are configured by the access device #1 for the UE #1 for inter-device communication (for example, V2X communication).

For ease of understanding and description, the following describes in detail the communications method in this application by using a process of detecting a resource pool #1 in the plurality of resource pools as an example.

By way of example and not limitation, the resource pool #1 may include but is not limited to at least one of a common resource pool, an exceptional resource pool, and a dedicated resource pool.

In S220, the UE #1 may sense the resource pool #1.

It should be noted that, in this application, the UE #1 may be UE in connected state (for example, RRC connected state). In this case, the UE #1 may sense a common resource pool, to be specific, the resource pool #1 may include a common resource pool.

Optionally, the UE #1 may also sense an exceptional resource pool and/or a dedicated resource pool.

Alternatively, in this application, the UE #1 may be UE in non-connected state (for example, idle mode, inactive state, or radio link failure state). In this case, the UE #1 may sense an exceptional resource pool, to be specific, the resource pool #1 may include an exceptional resource pool.

Optionally, the UE #1 may also sense a common resource pool and/or a dedicated resource pool.

In this application, the UE #1 may obtain a quantity threshold #1. In addition, the UE #1 may obtain a basic threshold #1, and perform sensing based on the quantity threshold #1 and the basic threshold #1, for example, determine a candidate resource from a resource pool.

In this application, the quantity threshold #1 may be configured by the access device #1 for the UE #1, or the quantity threshold #1 may be specified in a communications system or a communications protocol. This is not particularly limited in this application.

By way of example and not limitation, the quantity threshold #1 may be a percentage. For example, a value of the quantity threshold #1 may be 20%.

It should be understood that the foregoing enumerated specific value of the quantity threshold #1 is merely an example for description. This is not limited in this application. The value of the quantity threshold #1 may be randomly changed according to an actual requirement.

In addition, the basic threshold #1 may be configured by the access device #1 for the UE #1, or the basic threshold #1 may be specified in a communications system or a communications protocol. This is not particularly limited in this application.

By way of example and not limitation, for example, the basic threshold #1 may include a signal quality threshold (which is described in a case 1 and may also be referred to as a basic signal quality threshold), or the basic threshold #1 may also include a priority threshold (which is described in a case 2 and may also be referred to as a basic priority threshold). The following separately describes measurement processes in the foregoing two cases.

It should be noted that an "RSRP of a resource" may be understood as RSRP of data transmission using the resource.

An "RSRP" may be understood as an RSRP of a physical sidelink shared channel (physical sidelink shared channel, PSSCH).

In addition, a "PPPP of a resource" may be understood as a PPPP (ProSe Per-Packet Priority) of data transmission using the resource.

### Case 1

The signal quality threshold may also be referred to as a signal strength threshold. For example, signal quality may be measured based on a reference signal received power. Therefore, the signal quality threshold may include an RSRP threshold.

It should be understood that the foregoing enumerated RSRP threshold is only an example of the signal quality threshold. This is not limited in this application. For example, signal quality may be measured based on reference signal received quality. Therefore, the signal quality threshold may include an RSRQ threshold. For another example, the signal quality threshold may further include a signal-to-noise ratio threshold.

For ease of understanding and description, an example in which RSRP is used as signal quality and an RSRP threshold is used as a signal quality threshold is used below for description.

Without loss of generality, it is assumed that the resource pool #1 has K resources whose RSRP is less than or equal to a basic threshold #1A (that is, an RSRP-based basic threshold #1).

In addition, it is assumed that a quantity of resources included in the resource pool #1 is M, and the value of the quantity threshold #1 is N.

Herein, M is an integer greater than or equal to 1, K is an integer greater than or equal to 1 and less than or equal to M, and N is a percentage less than or equal to 1. In addition, a product of M and N is an integer, or a product of M×N may be rounded up or down. Moreover, N may be a percentage less than or equal to 1, or may be a fraction less than or equal to 1.

### Case a: K≥M×N

For example, the UE #1 may arrange the resources in the resource pool #1 in ascending order of RSRPs, and determine that first M×N arranged resources are candidate resources, where RSRPs of all the M×N resources each are less than or equal to the basic threshold #1A.

It should be noted that the "M×N resources" may be understood as an integer quantity of resources obtained after "M×N" is rounded up or down. Descriptions of same or similar cases are omitted below to avoid repetition.

For another example, the UE #1 may sense the resources in the resource pool #1 in a preset order (for example, the resource pool #1 may be a resource list configured for the access device, and the preset order may be an order in the resource list), and determine that first M×N resources whose RSRPs each are less than or equal to the basic threshold #1A are candidate resources.

### Case b: K<M×N

In this case, the UE #1 may adjust (or ramp up) the basic threshold #1A (specifically, a value of the basic threshold #1A), to be specific, the UE #1 may increase (or ramp up) the value of the basic threshold #1A.

There may be one or more adjustments. Herein, a total quantity of adjustments is denoted as P2. This is not particularly limited in this application.

In addition, an amplitude (for example, a decreased value) of each adjustment may be configured by the access device #1, or an amplitude of each adjustment may be specified by a communications system or a communications protocol. This is not particularly limited in this application.

In this application, an adjusted basic threshold #1A satisfies the following condition:

The resource pool #1 includes at least M×N resources whose RSRPs each are less than or equal to the adjusted basic threshold #1A.

For example, the UE #1 may arrange the resources in the resource pool #1 in ascending order of RSRPs, and determine that first M×N arranged resources are candidate resources.

For another example, the UE #1 may sense the resources in the resource pool #1 in a preset order (for example, the resource pool #1 may be a resource list configured for the access device, and the preset order may be an order in the resource list), and determine that X1 resources whose RSRPs each are less than or equal to the basic threshold #1A are candidate resources.

When X1<M×N, the UE #1 may increase the value of the basic threshold #1A, sense a remaining resource (a resource other than the foregoing X1 resources) in the resource pool #1, and determine that X2 resources whose RSRPs each are less than or equal to an adjusted basic threshold #1A are candidate resources.

When X1+X2<M×N, the UE #1 may increase a value of the basic threshold #1A (obtained after the first adjustment) again, sense a remaining resource (a resource other than the foregoing X1+X2 resources) in the resource pool #1, and determine that X3 resources whose RSRPs each are less than or equal to a basic threshold #1A obtained after the second adjustment are candidate resources.

By analogy, the UE #1 may perform P2 adjustments until a quantity of resources whose RSRPs each are less than or equal to a basic threshold #1A obtained after the plurality of adjustments in the resource pool #1 is greater than or equal to M×N.

A larger RSRP of a resource indicates severer interference of the resource. According to the solution provided in this application, a selected candidate resource may be a resource with relatively slight interference in a resource pool, so that practicability and an effect of this application can be further improved.

### Case 2

The UE #1 may sense a priority of each resource in the resource pool #1.

By way of example and not limitation, the "priority" may include a near distance communications data packet priority (ProSe Per-Packet Priority, PPPP). A PPPP of one resource may be a PPPP indicated by a priority label carried in a data packet carried on the resource.

It is assumed that the resource pool #1 has K resources whose PPPPs each are less than or equal to a basic threshold #1B (that is, a PPPP-based basic threshold #1).

In addition, it is assumed that a quantity of resources included in the resource pool #1 is M, and the value of the quantity threshold #1 is N.

### Case c: K≥M×N

For example, the UE #1 may arrange the resources in the resource pool #1 in ascending order of PPPPs, and determine that first M×N arranged resources are candidate resources.

For another example, the UE #1 may sense the resources in the resource pool #1 in a preset order (for example, the resource pool #1 may be a resource list configured for the access device, and the preset order may be an order in the resource list), and determine that first M×N resources whose PPPPs each are less than or equal to the basic threshold #1B are candidate resources.

### Case d: K<M×N

In this case, the UE #1 may adjust (or ramp up) the basic threshold #1 (specifically, a value of the basic threshold #1B), to be specific, the UE #1 may increase the value of the basic threshold #1B.

There may be one or more adjustments. This is not particularly limited in this application.

In addition, an amplitude (for example, a decreased value) of each adjustment may be configured by the access device #1, or an amplitude of each adjustment may be specified by a communications system or a communications protocol. This is not particularly limited in this application.

In this application, an adjusted basic threshold #1B satisfies the following condition:

The resource pool #1 includes at least M×N resources whose PPPPs each are less than or equal to the adjusted basic threshold #1B.

For example, the UE #1 may arrange the resources in the resource pool #1 in descending order of PPPPs, and determine that first M×N arranged resources are candidate resources.

For another example, the UE #1 may sense the resources in the resource pool #1 in a preset order (for example, the resource pool #1 may be a resource list configured for the access device, and the preset order may be an order in the resource list), and determine that X1 resources whose PPPPs each are less than or equal to the basic threshold #1B are candidate resources.

When X1<M×N, the UE #1 may increase the value of the basic threshold #1B, sense a remaining resource (a resource other than the foregoing X1 resources) in the resource pool #1, and determine that X2 resources whose PPPPs each are less than or equal to an adjusted basic threshold #1B are candidate resources.

When X1+X2<M×N, the UE #1 may increase a value of the basic threshold #1B (obtained after the first adjustment) again, sense a remaining resource (a resource other than the foregoing X1+X2 resources) in the resource pool #1, and determine that X3 resources whose PPPPs each are less than or equal to a basic threshold #1B obtained after the second adjustment are candidate resources.

By analogy, the UE #1 may perform P1 adjustments until a quantity of resources whose PPPPs each are less than or equal to a basic threshold #1B obtained after the plurality of adjustments in the resource pool #1 is greater than or equal to M×N.

A larger PPPP of a resource indicates severer interference of the resource. According to the solution provided in this application, a selected candidate resource may be a resource with relatively slight interference in a resource pool, so that practicability and an effect of this application can be further improved.

Then, the UE #1 may generate a measurement report based on the candidate resource.

The measurement report may include an index of each candidate resource.

For example, by way of example and not limitation, the index of the candidate resource may include but is not limited to at least one of the following information:
a subframe (subframe) number corresponding to the candidate resource; and
a resource index (resource index) corresponding to the candidate resource.

In this application, the measurement report may further include auxiliary information of the candidate resource.

For ease of understanding, the following uses a candidate resource #1 in the candidate resources as an example to describe auxiliary information in detail.

By way of example and not limitation, the auxiliary information of the candidate resource #1 may include at least one of the following information:

### 1. Priority of the candidate resource #1

Specifically, the priority of the candidate resource #1 is a PPPP of the candidate resource #1. As described above, the PPPP of the candidate resource #1 may be a PPPP indicated by a priority label carried in a data packet carried on the candidate resource #1. For example, the PPPP is carried in a scheduling assignment (scheduling assignment, SA) field in sidelink control information (sidelink control information, SCI).

### 2. Signal quality of the candidate resource #1

For example, the signal quality of the candidate resource #1 may include an RSRP of the candidate resource #1.

### 3. Type of the candidate resource #1

Specifically, the type of the candidate resource #1 may also be understood as a type of the resource pool (for example, the foregoing resource pool #1) to which the candidate resource #1 belongs.

To be specific, the type of the candidate resource #1 may be one of a common (common) type, an exceptional (exceptional) type, or a dedicated (dedicated) type.

It should be noted that, in this application, there may be a plurality of candidate resources.

For example, the plurality of candidate resources may be of a same type. In this case, the measurement report may include indication information of one type.

For another example, the plurality of candidate resources may include resources of different types. In this case, the measurement report may indicate a type corresponding to each candidate resource.

### 4. Communications status in which the UE #1 measures and selects the candidate resource

The communications status may include one of a connected state, a non-connected state (for example, an idle mode or an inactive state), or a radio link failure state.

### 5. Threshold used when the UE #1 selects the candidate resource #1

For example, if the foregoing M×N candidate resources are directly selected by the UE #1 without adjusting the basic threshold #1 (for example, the basic threshold #1A or the basic threshold #1B), the "threshold used when the UE #1 selects the candidate resource #1" may include the basic threshold #1.

For another example, if the foregoing M×N candidate resources are selected by the UE #1 after the basic threshold #1 is adjusted a plurality of times (for example, P1 or P2), the "threshold used when the UE #1 selects the candidate resource #1" may include the basic threshold #1 obtained after the plurality of adjustments.

For another example, if the foregoing M×N candidate resources are selected by the UE #1 after the basic threshold #1 is adjusted a plurality of times (for example, P1 or P2), and if the candidate resource #1 is selected by the UE #1 after the basic threshold #1 is adjusted Q times, where Q<P1 or Q<P2, the "threshold used when the UE #1 selects the candidate resource #1" may include the basic threshold #1 obtained after the Q adjustments and the basic threshold #1 obtained after the plurality of adjustments.

**Table 1 shows an example of the measurement report in this application.**

| Resource index | Threshold used for selecting an individual candidate resource | PPPP | RSRP | Type | Communications status | Finally adjusted threshold |
|---|---|---|---|---|---|---|
| Resource #a | Basic threshold #1 (for example, basic threshold #A or basic threshold #B) | al | a2 | Common | Connected state | Basic threshold |
| | | | | | | #1 obtained after a plurality of (for example, P1 or |
| Resource #b | Basic threshold #1 obtained after one adjustment | b1 | b2 | Common | Connected state | P2) adjustments |
| Resource #c | Basic threshold #1 obtained after two adjustments | c1 | c2 | Exceptional | Radio link failure | |
| Resource #d | Basic threshold #1 obtained after three adjustments | d1 | d2 | Dedicated | Connected state | |
| ⋮ | ⋮ | ⋮ | ⋮ | ⋮ | | |
| Resource #x | Basic threshold #1 obtained after x adjustments | x1 | x2 | Common | Connected state | |

It should be understood that specific content and a form of the measurement report that are understood above are merely examples for description. This is not limited in this application. The content and the form of the measurement report may be randomly changed according to an actual requirement. For example, the measurement report may further include a cell identifier of a cell corresponding to each resource, such as a physical cell identifier (Physical Cell Identifier, PCI) and/or a cell global identifier (Cell Global Identifier, CGI). For another example, the measurement report may further include an identifier (resource pool ID) of a resource pool to which a resource belongs. For another example, the measurement report may further include a zone identifier (Zone ID) of a zone corresponding to each resource and an identifier of an access device (that is, the access device #1) configuring the resource such as a gNB ID.

In S230, the UE #1 may send the measurement report.

For example, the UE #1 may periodically send the measurement report.

To be specific, a plurality of reporting periods may be obtained through division in time domain, so that the UE #1 can send the measurement report in a reporting period including a current moment or in a next reporting period.

Alternatively, the UE #1 may send the measurement report after determining that a preset reporting event occurs.

By way of example and not limitation, the reporting event may include but is not limited to any one of the event 1 to the event 3.

When the UE #1 is in mode4, the UE #1 may record the measurement report in, for example, UE history information (UE history information) of the UE #1 or a minimization of drive test (Minimization Drive Test, MDT) log (log). Therefore, after the UE #1 switches from a non-connected state (for example, an idle mode or an inactive state) to a connected state or after the UE #1 switches from OOC to IC, the UE #1 may send the measurement report.

By way of example and not limitation, when the UE #1 is in mode4, the measurement report may include only the index of the candidate resource instead of the auxiliary information.

It should be noted that, after the UE #1 switches from a non-connected state to a connected state or after the UE #1 switches from OOC to IC, the UE #1 may move, to be specific, a serving access device of the UE #1 may change from the access device #1 to another access device, in other words, the access device #1 becomes a source access device of the UE #1. In this case, the UE #1 may send the measurement report to a new serving access device (or a target access device), and the target access device may send the measurement report to the access device #1 by using, for example, a context request message, an X2/Xn interface message, or a newly defined message.

Optionally, the target access device may send the measurement report to a V2X centralized management node or an OAM entity, and the V2X centralized management node or the OAM entity optimizes V2X communication for the UE #1. For an optimization process, refer to S240. Details are not described herein again. It should be noted that the V2X centralized management node may be located in a core network or another centralized management node. This is not limited in this embodiment of this application.

When the UE #1 is in mode3, the UE #1 may directly send the measurement report to the access device #1 by using, for example, an RRC message.

In S240, the access device #1 may control (or optimize) communication (for example, V2X communication) of the UE #1 based on the measurement report.

It can be understood that optimizing communication for the UE #1 includes optimizing a V2X transmission mode or a V2X transmission resource pool of the UE.

Optionally, the access device #1 may alternatively send the measurement report to a V2X centralized management node or an OAM entity, and the OAM entity performs optimization based on the measurement report. It should be noted that the V2X centralized management node may be located in a base station, a core network, or another centralized management node. This is not limited in this application.

For example, the access device #1 determines a mode (specifically, a scheduling mode such as mode3 or mode4) of the UE #1 based on the measurement report.

By way of example and not limitation, if the measurement report indicates that an RSRP of a resource in a resource pool (for example, the resource pool #a) is relatively low, it indicates that interference of the resource in the resource pool #a is relatively slight. In this case, there is a relatively high probability that the UE #1 can obtain the resource in the resource pool #a through contention, and therefore the access device #1 may configure the resource pool #a as a resource pool used by the UE #1 in an autonomous selection mode (for example, mode4).

If the measurement report indicates that an RSRP of a resource in a resource pool (for example, the resource pool #b) is relatively high, it indicates that interference of the resource in the resource pool #b is relatively severe. In this case, there is a relatively low probability that the UE #1 can obtain the resource in the resource pool #b through contention, and therefore the access device #1 may re-configure the scheduling mode of the UE #1 as a base station scheduling mode (for example, mode3).

If the measurement report indicates that a PPPP of a resource in a resource pool (for example, the resource pool #c) is relatively low, it indicates that interference of the resource in the resource pool #c is relatively slight. In this case, there is a relatively high probability that the UE #1 can obtain the resource in the resource pool #c through contention, and therefore the access device #1 may re-configure the scheduling mode of the UE #1 as the autonomous selection mode (for example, mode4).

If the measurement report indicates that a PPPP of a resource in a resource pool (for example, the resource pool #d) is relatively high, it indicates that interference of the resource in the resource pool #d is relatively severe. In this case, there is a relatively low probability that the UE #1 can obtain the resource in the resource pool #d through contention, and therefore the access device #1 may re-configure the scheduling mode of the UE #1 as the base station scheduling mode (for example, mode3).

For another example, the access device #1 determines a resource pool size based on the measurement report.

If the measurement report indicates that an RSRP of a resource in a resource pool (for example, the resource pool #e) is relatively high, interference of the resource in the resource pool #e is relatively severe. In addition, if the resource pool #e is a resource pool used in mode4, there is a relatively low probability that the UE #1 can obtain the resource in the resource pool #e through contention, and therefore the access device #1 may increase a size of the resource in the resource pool #e.

If the measurement report indicates that a PPPP of a resource in a resource pool (for example, the resource pool #f) is relatively high, interference of the resource in the resource pool #f is relatively severe. In addition, if the resource pool #f is a resource pool used in mode4, there is a relatively low probability that the UE #1 can obtain the resource in the resource pool #f through contention, and therefore the access device #1 may increase a resource in the resource pool #f.

For another example, the access device #1 updates the basic threshold #1 (for example, the basic threshold #1A or the basic threshold #1B) based on the measurement report.

For example, if the UE #1 finally determines all candidate resources only after adjusting the basic threshold #1 L times, the access device #1 may update the basic threshold #1. For example, the access device #1 may make a value of an updated basic threshold #1 close to a value of a basic threshold #1 obtained after the L adjustments.

In this case, the access device #1 may further send the updated basic threshold #1 to the UE #1, so that the UE #1 may select a candidate resource by using the updated basic threshold #1 during subsequent detection.

It should be understood that the foregoing enumerated optimization process is merely an example for description. This is not limited in this application. For example, the access device may further optimize a zone (zone) based on the measurement report, for example, optimize a zone size or a zone location, or optimize a mapping relationship between a zone and a resource.

Optionally, the access device #1 may further perform resource negotiation with a neighboring station. The resource negotiation process may be similar to the process described in the following method 300 or 400, and is described below in detail.

It should be noted that, in this application, the access device #1 may be a CU. In this case, the UE #1 may report the measurement report by using RRC signaling, and the CU may send an optimization result (for example, optimized mode information, optimized resource pool information, or an optimized basic threshold #1) of communication for the UE #1 to a DU through, for example, an F1 interface.

The access device #1 may alternatively be a DU. In this case, the UE #1 may send the measurement report to the DU by using, for example, a media access control (media access control, MAC) control element (control element, CE).

Alternatively, the UE #1 may send the measurement report to a CU. After the CU receives the measurement report, the CU may send the measurement report to the DU through an F1 interface, and the DU performs optimization and may send an optimization result to the CU.

If the measurement report indicates that the terminal device is in a radio link failure state, the access device may optimize an exceptional resource pool.

If the measurement report indicates that the terminal device is in connected state, the access device may optimize a common resource pool or a dedicated resource pool.

If the measurement report indicates that the terminal device is in non-connected state, the access device may optimize a common resource pool.

In addition, a specific optimization process may be similar to the process described in S240. To avoid repetition, detailed descriptions thereof are omitted herein.

A currently to-be-optimized resource pool is an exceptional resource pool. If the terminal device is in connected state, the to-be-optimized resource pool is a common or dedicated resource pool. If the terminal device is in non-connected state, the to-be-optimized resource pool is a common resource pool

According to the solution in this application, a measurement report reported by a terminal device includes auxiliary information, and the auxiliary information may include the threshold (for example, the RSRP threshold or the PPPP threshold) used by the first device for selecting the candidate resource, the priority of the candidate resource, the signal quality of the candidate resource, the type of the resource pool to which the candidate resource belongs, and the communications status in which the first device selects the candidate resource. The type of the resource pool includes the common type, the exceptional type, or the dedicated type, and the communications status includes at least one of the connected state, the non-connected state, or the radio link failure state. Therefore, an access device can evaluate resource interference more accurately based on the auxiliary information. This can effectively optimize a communications parameter and improve user experience.

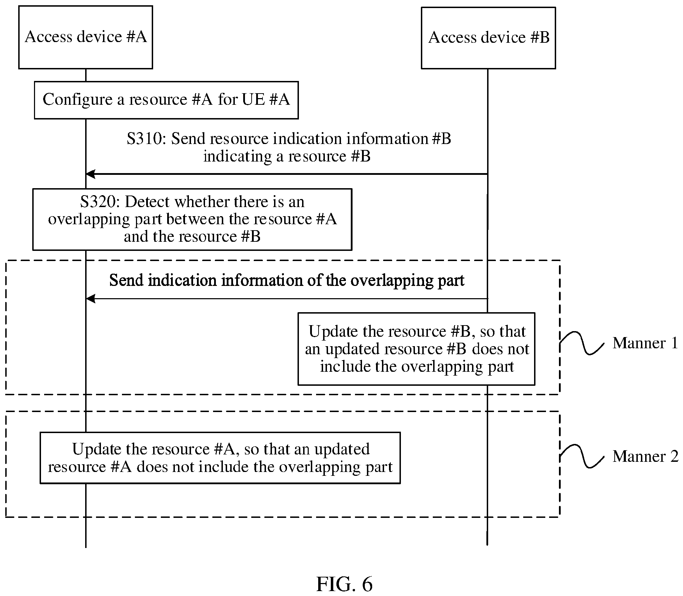

FIG. 6 is a schematic interaction diagram of another example of a wireless communications process according to this application.

As shown in FIG. 6, an access device #A (that is, another example of a first access device) may send configuration information #A to UE #A (that is, another example of a first device), where the configuration information #A may be used to indicate a plurality of resource pools that are configured by the access device #A for the UE #A for inter-device communication (for example, V2X communication) and that are denoted as resource pools #A.

By way of example and not limitation, the resource pool #A may include but is not limited to a common resource pool, an exceptional resource pool, and a dedicated resource pool.

In addition, the access device #A may further update (or optimize) the resource pool #A based on a measurement report reported by the UE #A. The process may be similar to the optimization process described in the method 200. To avoid repetition, detailed descriptions thereof are omitted herein.

In addition, in this application, an access device #B (that is, an example of a second access device) may send configuration information #B to UE #B (that is, an example of a second device), where the configuration information #B may be used to indicate a plurality of resource pools that are configured by the access device #B for the UE #B for inter-device communication (for example, V2X communication) and that are denoted as resource pools #B.

By way of example and not limitation, the resource pool #B may include but is not limited to a common resource pool, an exceptional resource pool, and a dedicated resource pool.

In addition, the access device #B may further update (or optimize) the resource pool #B based on a measurement report reported by the UE #B. The process may be similar to the optimization process described in the method 200. To avoid repetition, detailed descriptions thereof are omitted herein.

It should be noted that the common, exceptional, and dedicated resource pools each may be at a cell granularity, to be specific, each cell has the three types of resources.

The common, exceptional, and dedicated resource pools each may be at a zone granularity, to be specific, each zone in each cell has the three types of resources and the three types of resources in each zone are different.

In S310, the access device #B may send resource indication information #B to the access device #A through, for example, an X2/Xn interface, where the resource indication information #B may indicate a type of the resource pool #B.

The type of the resource pool #B may include a common (common) type, an exceptional (exceptional) type, or a dedicated type.

In addition, the common type may further include a common receive type and a common transmit type.

To be specific, the resource indication information #B may further indicate whether the resource pool #B is a common resource pool used for receiving or a common resource pool used for sending.

In addition, the resource indication information #B may further indicate an index of a resource included in the resource pool #B (or an updated resource pool #B).

Optionally, the resource indication information #B may further include but is not limited to at least one of the following information:
a zone identifier (for example, a zone ID) of a zone corresponding to the resource in the resource pool #B (or the updated resource pool #B), a cell identifier (for example, a PCI or a CGI) of a cell corresponding to the resource in the resource pool #B (or the updated resource pool #B), a subframe corresponding to the resource in the resource pool #B (or the updated resource pool #B), a start resource block corresponding to the resource in the resource pool #B (or the updated resource pool #B), a quantity of subchannels corresponding to the resource in the resource pool #B (or the updated resource pool #B), a size of a subchannel corresponding to the resource in the resource pool #B (or the updated resource pool #B), and a usage (for example, used for sending or receiving) of the resource in the resource pool #B (or the updated resource pool #B).

By way of example and not limitation, the resource indication information #B may be in the following form:
information element (information element, IE)/group (group) name (name);
PCI;
CGI;
zone identifier list (Zone ID list);
>zone identifier (zone ID);
>V2X resource pool (V2X resource pool item) (an example of a resource pool);
>>V2X common resource pool;
>>V2X exceptional resource pool; and
>>V2X dedicated resource pool.

Therefore, the access device #A may determine, based on the resource indication information #B, a resource that is configured by the access device #B for V2X communication, that is, a resource in the resource pool #B that is denoted as a resource #B.

In addition, the access device #A can learn of a resource that is configured by the access device #A for V2X communication, that is, a resource in the resource pool #A that is denoted as a resource #A.

In S320, the access device #A may determine whether there is an overlapping part between the resource #B and the resource #A.

In this application, that there is an overlapping part between two resources may mean that the two resources partially or entirely overlap in time domain.

Alternatively, that there is an overlapping part between two resources may mean that the two resources partially or entirely overlap in frequency domain.

Alternatively, that there is an overlapping part between two resources may mean that the two resources include one or more same resource blocks or resource elements (resource element, RE).

If there is the overlapping part between the resource #B and the resource #A, the access device #A may perform processing in any one of the following manners.

### Manner 1

The access device #A may update the resource #A (or update the resource pool #A) based on the overlapping part, so that an updated resource #A (or an updated resource pool #A) does not include the overlapping part.

It should be noted that the access device #A may be a CU, to be specific, a body for configuring or updating the resource #A may be a CU. In this case, the CU may further send the updated resource #A to the DU.

Alternatively, the access device #A may be a CU, but a body for configuring or updating the resource #A is a DU of the access device #A. In this case, the access device #A sends the determined overlapping part between the resource #B and the resource #A to the DU of the access device #A, and the DU configures or updates the resource #A.

Alternatively, the access device #A may be a DU, to be specific, a body for configuring or updating the resource #A may be a DU. In this case, the access device #B may send the resource indication information #B to a CU of the access device #A, and the CU sends the resource indication information #B to the access device #A (that is, the DU).

### Manner 2

The access device #A sends indication information of the overlapping part to the access device #B. Therefore, the access device #B can update the resource #B (or update the resource pool #B) based on the overlapping part, so that an updated resource #B (or an updated resource pool #B) does not include the overlapping part.

It should be noted that the access device #A may be a CU. In this case, the access device #A may directly send the indication information of the overlapping part to the access device #B (for example, a CU of the access device #B).

Alternatively, the access device #A may be a DU. In this case, the access device #A may send the indication information of the overlapping part to a CU of the access device #A, and the CU sends the indication information of the overlapping part to the access device #B (for example, a CU of the access device #B).

In this application, the indication information of the overlapping part may indicate a type of a resource pool to which the overlapping part belongs.

The type of the resource pool may include a common (common) type, an exceptional (exceptional) type, or a dedicated type.

In addition, the common type may further include a common receive type and a common transmit type.

To be specific, the indication information of the overlapping part may further indicate whether the overlapping part is a common resource pool used for receiving or a common resource pool used for sending.

In addition, the indication information of the overlapping part may further indicate an index of the resource pool to which the overlapping part belongs.

In addition, the indication information of the overlapping part may further indicate an index of the overlapping part in the resource pool to which the overlapping part belongs.

Optionally, the indication information of the overlapping part may further include but is not limited to at least one of the following information:
a zone identifier (for example, a zone ID) of a zone corresponding to a resource in the overlapping part, a cell identifier (for example, a PCI or a CGI) of a cell corresponding to the resource in the overlapping part, a subframe corresponding to the resource in the overlapping part, a start resource block corresponding to the resource in the overlapping part, a quantity of subchannels corresponding to the resource in the overlapping part, a size of a subchannel corresponding to the resource in the overlapping part, and a usage (for example, used for sending or receiving) of the resource in the overlapping part. It should be noted that, in this application, there may be one or more access devices #B. This is not particularly limited in this application.

In addition, in this application, information may be transmitted between access devices by using an existing X2/Xn interface message, or by using another X2/Xn interface message such as a dedicated message. This is not limited in this application. Information may be transmitted between a CU and a DU by using an existing F1/V1 interface message, or by using another F1/V1 interface message such as a dedicated message. This is not limited in this application.

According to the solution provided in this application, a plurality of access devices interact and negotiate a resource pool used for inter-device communication, so that resource pools of the access devices can be prevented from overlapping. This can prevent interference to communication between the devices, improve communications reliability, and improve user experience.

For example, if the access device #B updates a common transmit (transport, Tx) resource pool according to the foregoing method 200, because a common receive (receive, Rx) resource pool of the access device #A may include a common Tx resource pool and an exceptional resource pool of a neighboring cell, the access device #A may update the Rx resource pool of the access device #A based on an obtained updated Tx resource pool of the access device #B. This can prevent interference to communication between the devices, improve communications reliability, and improve user experience.

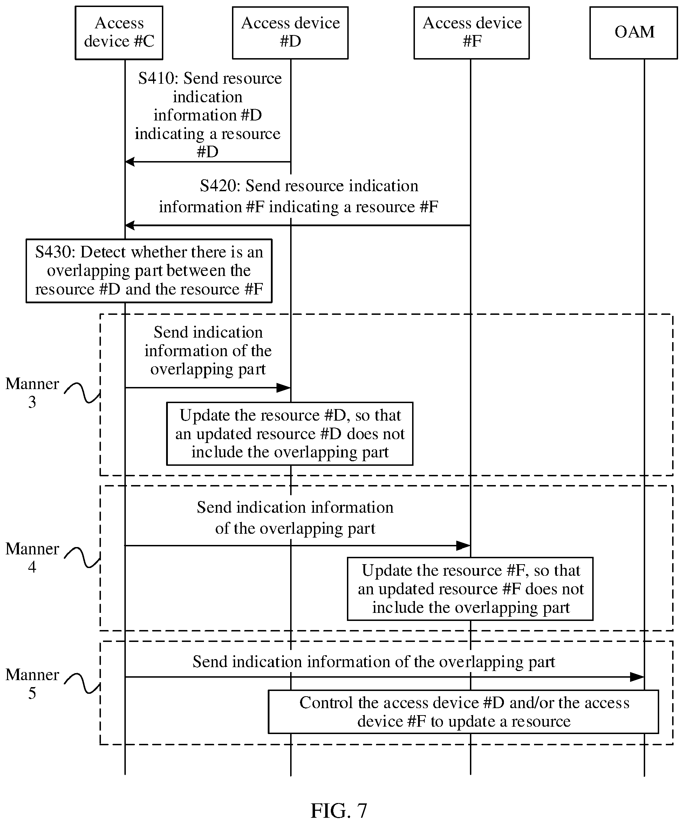

FIG. 7 is a schematic interaction diagram of another example of a wireless communications process according to this application.

As shown in FIG. 7, an access device #D (that is, an example of a second access device) may send configuration information #D to UE #D (that is, an example of a second device), where the configuration information #D may be used to indicate a plurality of resource pools that are configured by the access device #D for the UE #D for inter-device communication (for example, V2X communication) and that are denoted as resource pools #D.

By way of example and not limitation, the resource pool #D may include but is not limited to a common resource pool, an exceptional resource pool, and a dedicated resource pool.

In addition, the access device #D may further update the resource pool #D based on a measurement report reported by the UE #D. The process may be similar to the process described in the method 200. To avoid repetition, detailed descriptions thereof are omitted herein.

In addition, an access device #F (that is, another example of a second access device) may send configuration information #F to UE #F (that is, another example of a second device), where the configuration information #F may be used to indicate a plurality of resource pools that are configured by the access device #F for the UE #F for inter-device communication (for example, V2X communication) and that are denoted as resource pools #F.

By way of example and not limitation, the resource pool #F may include but is not limited to a common resource pool, an exceptional resource pool, and a dedicated resource pool.

In addition, the access device #F may further update the resource pool #F based on a measurement report reported by the UE #F. The process may be similar to the process described in the method 200. To avoid repetition, detailed descriptions thereof are omitted herein.

It should be noted that the common, exceptional, and dedicated resource pools each may be at a cell granularity or at a zone granularity. This is not particularly limited in this application.

In S410, the access device #D may send resource indication information #D to the access device #C through, for example, an X2/Xn/F1/V1 interface, where the resource indication information #D may indicate a type of the resource pool #D.

The type of the resource pool #D may include a common (common) type, an exceptional (exceptional) type, or a dedicated type.

In addition, the common type may further include a common receive type and a common transmit type.

To be specific, the resource indication information #D may further indicate whether the resource pool #D is a common resource pool used for receiving or a common resource pool used for sending.

In addition, the resource indication information #D may further indicate an index of a resource included in the resource pool #D (or an updated resource pool #D).

Optionally, the resource indication information #D may further include but is not limited to at least one of the following information:
a zone identifier of a zone corresponding to the resource in the resource pool #D (or the updated resource pool #D), a cell identifier (for example, a PCI or a CGI) of a cell corresponding to the resource in the resource pool #D (or the updated resource pool #D), a subframe corresponding to the resource in the resource pool #D (or the updated resource pool #D), a start resource block corresponding to the resource in the resource pool #D (or the updated resource pool #D), a quantity of subchannels corresponding to the resource in the resource pool #D (or the updated resource pool #D), a size of a subchannel corresponding to the resource in the resource pool #D (or the updated resource pool #D), and a usage (for example, used for sending or receiving) of the resource in the resource pool #D (or the updated resource pool #D).

Therefore, the access device #C may determine, based on the resource indication information #D, a resource that is configured by the access device #D for V2X communication, that is, a resource in the resource pool #D that is denoted as a resource #D.

In S420, the access device #F may send resource indication information #F to the access device #C through, for example, an X2/Xn/F1N1 interface, where the resource indication information #F may include an index of a resource included in the resource pool #F (or an updated resource pool #F).

Optionally, the resource indication information #F may further include but is not limited to at least one of the following information:
a zone identifier of a zone corresponding to the resource in the resource pool #F (or the updated resource pool #F), a cell identifier (for example, a PCI or a CGI) of a cell corresponding to the resource in the resource pool #F (or the updated resource pool #F), a subframe corresponding to the resource in the resource pool #F (or the updated resource pool #F), a start resource block corresponding to the resource in the resource pool #F (or the updated resource pool #F), a quantity of subchannels corresponding to the resource in the resource pool #F (or the updated resource pool #F), a size of a subchannel corresponding to the resource in the resource pool #F (or the updated resource pool #F), and a usage (for example, used for sending or receiving) of the resource in the resource pool #F (or the updated resource pool #F).

Therefore, the access device #C may determine, based on the resource indication information #F, a resource that is configured by the access device #F for V2X communication, that is, a resource in the resource pool #F that is denoted as a resource #F.

In S430, the access device #C may determine whether there is an overlapping part between the resource #F and the resource #D.

If there is the overlapping part between the resource #D and the resource #F, the access device #C may perform processing in any one of the following manners.

### Manner 3

The access device #A sends indication information of the overlapping part to the access device #D. Therefore, the access device #D can update the resource #D (or update the resource pool #D) based on the overlapping part, so that an updated resource #D (or an updated resource pool #D) does not include the overlapping part.

### Manner 4

The access device #D sends indication information of the overlapping part to the access device #F. Therefore, the access device #F can update the resource #F (or update the resource pool #F) based on the overlapping part, so that an updated resource #F (or an updated resource pool #F) does not include the overlapping part.

### Manner 5

The access device #D sends indication information of the overlapping part to a management device such as an operation, administration and maintenance (Operation Administration and Maintenance, OAM) network element.

Optionally, the access device #D may further send identifiers of the access device #D and the access device #F to the OAM. Therefore, the OAM can control the access device #D and/or the access device #F to update a resource pool, so that the resource pools that are used for V2X communication and that are of the access device #D and the access device #F do not include the overlapping part.

The access device #F sends indication information of the overlapping part. Therefore, the access device #F can update the resource #F (or update the resource pool #F) based on the overlapping part, so that an updated resource #F (or an updated resource pool #F) does not include the overlapping part.

For example, by way of example and not limitation, the access device #C may be a CU, and the access device #D and the access device #F may be DUs controlled by the CU.

In this application, the indication information of the overlapping part may indicate a type of a resource pool to which the overlapping part belongs.

The type of the resource pool may include a common (common) type, an exceptional (exceptional) type, or a dedicated type.

In addition, the common type may further include a common receive type and a common transmit type.

To be specific, the indication information of the overlapping part may further indicate whether the overlapping part is a common resource pool used for receiving or a common resource pool used for sending.

In addition, the indication information of the overlapping part may further indicate an index of the resource pool to which the overlapping part belongs.

In addition, the indication information of the overlapping part may further indicate an index of the overlapping part in the resource pool to which the overlapping part belongs.

Optionally, the indication information of the overlapping part may further include but is not limited to at least one of the following information:
a zone identifier (for example, a zone ID) of a zone corresponding to a resource in the overlapping part, a cell identifier (for example, a PCI or a CGI) of a cell corresponding to the resource in the overlapping part, a subframe corresponding to the resource in the overlapping part, a start resource block corresponding to the resource in the overlapping part, a quantity of subchannels corresponding to the resource in the overlapping part, a size of a subchannel corresponding to the resource in the overlapping part, and a usage (for example, used for sending or receiving) of the resource in the overlapping part.

According to the solution provided in this application, a plurality of access devices interact and negotiate a resource pool used for inter-device communication, so that resource pools of the access devices can be prevented from overlapping. This can prevent interference to communication between the devices, improve communications reliability, and improve user experience.

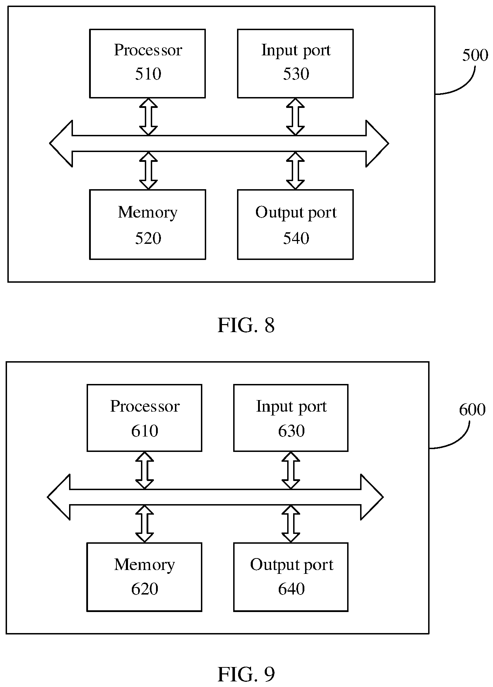

According to the foregoing method, FIG. 8 is a schematic diagram of a wireless communications apparatus 500 according to an embodiment of this application.

The apparatus 500 may be a first device (for example, a terminal device), or may be a chip or a circuit, for example, a chip or a circuit that may be disposed in the first device.

The apparatus 500 may include a processing unit 510 (that is, an example of a processing unit), and optionally, may further include a storage unit 520. The storage unit 520 is configured to store instructions.

In a possible manner, the processing unit 510 is configured to execute the instructions stored in the storage unit 520, so that the apparatus 500 implements the steps performed by the terminal device (for example, the terminal device #A) in the foregoing method.

The apparatus 500 may further include an input port 530 (that is, an example of a communications unit) and an output port 540 (that is, another example of a communications unit). Further, the processing unit 510, the storage unit 520, the input port 530, and the output port 540 may communicate with each other through an internal connection path, to transmit a control signal and/or a data signal. The storage unit 520 is configured to store a computer program. The processing unit 510 may be configured to invoke the computer program from the storage unit 520 and run the computer program, to complete the steps performed by the terminal device in the foregoing method. The storage unit 520 may be integrated into the processing unit 510, or may be disposed separately from the processing unit 510.

Optionally, in a possible manner, the input port 530 may be a receiver, and the output port 540 is a transmitter. The receiver and the transmitter may be a same physical entity or different physical entities. When being the same physical entity, the receiver and the transmitter may be collectively referred to as a transceiver.

Optionally, in a possible manner, the input port 530 is an input interface, and the output port 540 is an output interface.

In an implementation, it may be considered that functions of the input port 530 and the output port 540 are implemented by using a transceiver circuit or a dedicated transceiver chip. It may be considered that the processing unit 510 may be implemented by using a dedicated processing chip, a processing circuit, a processing unit, or a general-purpose chip.

In another implementation, it may be considered that the communications device (for example, the first device) provided in this embodiment of this application is implemented by using a general-purpose computer. To be specific, program code for implementing functions of the processing unit 510, the input port 530, and the output port 540 is stored in the storage unit 520, and a general-purpose processing unit executes the code in the storage unit 520 to implement the functions of the processing unit 510, the input port 530, and the output port 540.

In an implementation, the input port 530 is configured to receive configuration information from a first access device, where the configuration information is used to indicate at least one resource pool used for inter-device communication, and the resource pool includes a plurality of resources.

The output port 540 is configured to send a measurement report to the first access device, where the measurement report includes an index of a candidate resource in the resource pool and at least one of the following information:
a first threshold used by the first device for selecting the candidate resource, a priority of the candidate resource, signal quality of the candidate resource, a type of the resource pool to which the candidate resource belongs, and a communications status in which the first device selects the candidate resource, where the type of the resource pool includes a common type, an exceptional type, or a dedicated type, and the communications status includes a connected state, a non-connected state, or a radio link failure state.

The candidate resource includes one or more resources.

The apparatus 500 is configured in or is the first device.

Optionally, the input port 530 is further configured to receive update information from the first access device, where the update information is used to indicate an updated basic priority threshold or an updated basic signal quality threshold, and the updated basic priority threshold or the updated basic signal quality threshold is obtained through updating by the first access device based on the measurement report.

Functions and actions of the modules or units in the apparatus 500 enumerated above are merely examples for description. When the apparatus 500 is configured in or is the first device, the modules or units in the apparatus 500 may be configured to perform the actions or processing processes performed by the first device in the foregoing method. Herein, to avoid repetition, detailed descriptions thereof are omitted.

For concepts, explanations, detailed descriptions, and other steps of the apparatus 500 that are related to the technical solution provided in the embodiments of this application, refer to the descriptions of the content in the foregoing method or other embodiments. Details are not described herein again.

According to the foregoing method, FIG. 9 is a schematic diagram of a wireless communications apparatus 600 according to an embodiment of this application.

The apparatus 600 may be an access device (for example, a first access device), or may be a chip or a circuit, for example, a chip or a circuit that may be disposed in the access device.

The apparatus 600 may include a processing unit 610 (that is, an example of a processing unit) and a storage unit 620. The storage unit 620 is configured to store instructions.

The processing unit 610 is configured to execute the instructions stored in the storage unit 620, so that the apparatus 600 implements the steps performed by the access device in the foregoing method.

The apparatus 600 may further include an input port 630 (that is, an example of a communications unit) and an output port 640 (that is, another example of a communications unit). Further, the processing unit 610, the storage unit 620, the input port 630, and the output port 640 may communicate with each other through an internal connection path, to transmit a control signal and/or a data signal. The storage unit 620 is configured to store a computer program. The processing unit 610 may be configured to invoke the computer program from the storage unit 620 and run the computer program, to control the input port 630 to receive a signal, and control the output port 640 to send a signal, thereby completing the steps performed by the terminal device in the foregoing method. The storage unit 620 may be integrated into the processing unit 610, or may be disposed separately from the processing unit 610.

Optionally, if the apparatus 600 is a communications device (for example, an access device), the input port 630 is a receiver, and the output port 640 is a transmitter. The receiver and the transmitter may be a same physical entity or different physical entities. When being the same physical entity, the receiver and the transmitter may be collectively referred to as a transceiver.

Optionally, if the apparatus 600 is a chip or a circuit, the input port 630 is an input interface, and the output port 640 is an output interface.

In an implementation, it may be considered that functions of the input port 630 and the output port 640 are implemented by using a transceiver circuit or a dedicated transceiver chip. It may be considered that the processing unit 610 may be implemented by using a dedicated processing chip, a processing circuit, a processing unit, or a general-purpose chip.

In another implementation, it may be considered that the communications device (for example, the access device) provided in this embodiment of this application is implemented by using a general-purpose computer. To be specific, program code for implementing functions of the processing unit 610, the input port 630, and the output port 640 is stored in the storage unit 620, and a general-purpose processing unit executes the code in the storage unit 620 to implement the functions of the processing unit 610, the input port 630, and the output port 640.

In an implementation, the output port 640 is configured to send configuration information to a first device, where the configuration information is used to indicate at least one resource pool used for inter-device communication, and the resource pool includes a plurality of resources.

The input port 630 is configured to receive a measurement report from the first device, where the measurement report includes an index of a candidate resource in the resource pool and at least one of the following information:
a first threshold used by the first device for selecting the candidate resource, a priority of the candidate resource, signal quality of the candidate resource, a type of the resource pool to which the candidate resource belongs, and a communications status in which the terminal device selects the candidate resource, where the type of the resource pool includes a common type, an exceptional type, or a dedicated type, and the communications status includes a connected state, a non-connected state, or a radio link failure state.

The candidate resource includes one or more resources.

Optionally, the processing unit 610 is configured to update the basic priority threshold or the basic signal quality threshold based on the measurement report.

The output port 640 is configured to send first update information to the first device, where the update information is used to indicate an updated basic priority threshold and/or an updated basic signal quality threshold.

Optionally, the processing unit 610 is configured to update a scheduling mode of the terminal device based on the measurement report.

Optionally, the processing unit 610 is configured to update the resource pool based on the measurement report.

Optionally, the processing unit 610 is configured to update, based on the measurement report, a zone configured by the first access device.

Optionally, the input port 630 is configured to receive first resource indication information sent by a second access device, where the first resource indication information is used to indicate a resource pool used by the second access device.

The processing unit 610 is configured to update, based on the first resource indication information, a resource pool used by the first access device.

Optionally, the output port 640 is configured to send second resource indication information to the second access device or an access management device, where the second resource indication information is used to indicate a resource pool used by the first access device.

Optionally, the first access device includes a distributed unit DU; or the first access device includes a centralized unit CU.

Functions and actions of the modules or units in the apparatus 600 enumerated above are merely examples for description. When the apparatus 600 is configured in or is the access device, the modules or units in the apparatus 600 may be configured to perform the actions or processing processes performed by the access device in the foregoing method. Herein, to avoid repetition, detailed descriptions thereof are omitted.

For concepts, explanations, detailed descriptions, and other steps of the apparatus 600 that are related to the technical solution provided in the embodiments of this application, refer to the descriptions of the content in the foregoing method or other embodiments. Details are not described herein again.

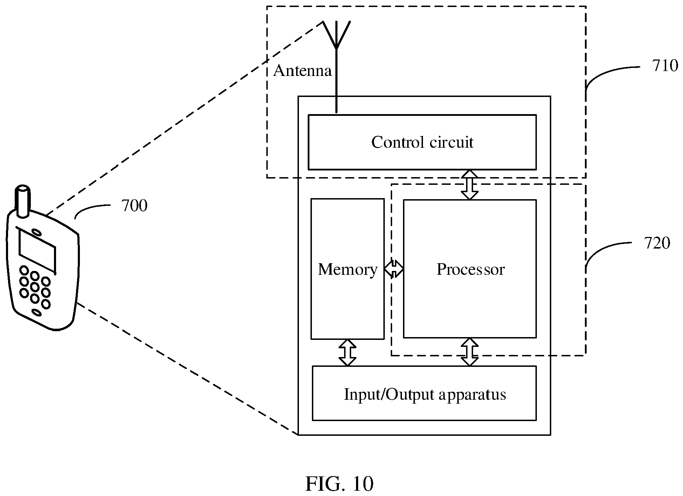

FIG. 10 is a schematic structural diagram of a terminal device 700 according to this application. The apparatus 500 may be configured in the terminal device 700, or the apparatus 500 may be the terminal device 700. In other words, the terminal device 700 may perform the actions performed by the terminal device in the foregoing method 200.

For ease of description, FIG. 10 shows only main components of the terminal device. As shown in FIG. 10, the terminal device 700 includes a processor, a memory, a control circuit, an antenna, and an input/output apparatus.

The processor is mainly configured to: process a communications protocol and communications data, control the entire terminal device, execute a software program, and process data of the software program, for example, is configured to support the terminal device in performing the actions described in the foregoing embodiment of the indication method for transmitting a precoding matrix. The memory is mainly configured to store the software program and the data, for example, store the codebook described in the foregoing embodiments. The control circuit is mainly configured to perform conversion between a baseband signal and a radio frequency signal, and process the radio frequency signal. A combination of the control circuit and the antenna may also be referred to as a transceiver that is mainly configured to send and receive a radio frequency signal in an electromagnetic wave form. The input/output apparatus such as a touchscreen, a display, or a keyboard is mainly configured to receive data entered by a user, and output data to the user.

After the terminal device is powered on, the processor may read the software program in a storage unit, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 10 shows only one memory and one processor. An actual terminal device may include a plurality of processors and a plurality of memories. The memory may also be referred to as a storage medium, a storage device, or the like. This is not limited in this embodiment of this application.

For example, the processor may include a baseband processor and a central processing unit. The baseband processor is mainly configured to process the communications protocol and the communications data. The central processing unit is mainly configured to control the entire terminal device, execute the software program, and process the data of the software program. The processor in FIG. 10 integrates functions of the baseband processor and the central processing unit. A person skilled in the art may understand that the baseband processor and the central processing unit may be independent processors, and are connected to each other by using technologies such as a bus. A person skilled in the art may understand that the terminal device may include a plurality of baseband processors to adapt to different network standards, the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communications protocol and the communications data may be built in the processor, or may be stored in the storage unit in a form of a software program. The processor executes the software program to implement a baseband processing function.

For example, in this embodiment of this application, the antenna and the control circuit that have receiving and sending functions may be considered as a transceiver unit 710 of the terminal device 700, and the processor having a processing function may be considered as a processing unit 720 of the terminal device 700. As shown in FIG. 700, the terminal device 700 includes the transceiver unit 710 and the processing unit 720. The transceiver unit may also be referred to as a transceiver, a transceiver machine, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. In other words, the transceiver unit includes the receiving unit and the sending unit. For example, the receiving unit may also be referred to as a receiver machine, a receiver, or a receive circuit, and the sending unit may be referred to as a transmitter machine, a transmitter, or a transmit circuit.

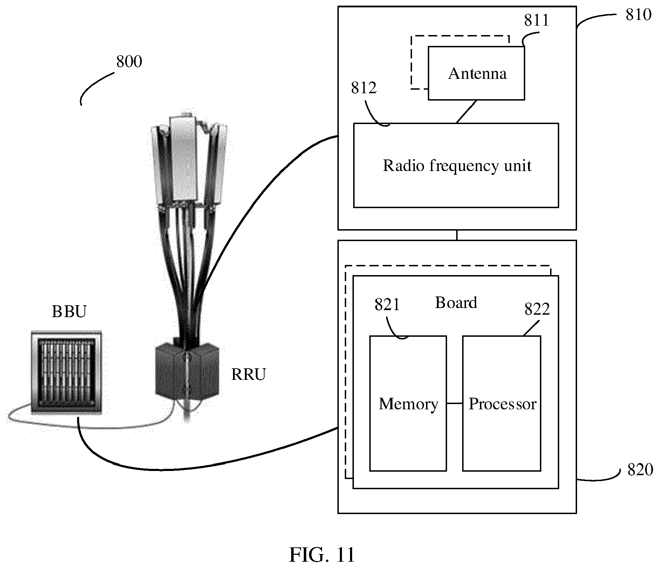

FIG. 11 is a schematic structural diagram of an access device 800 according to an embodiment of this application. The access device 800 may be configured to implement functions of the access device (for example, the access device #1, the access device #A, the access device #B, the access device #C, the access device #D, or the access device #F) in the foregoing method. The access device 800 includes one or more radio frequency units such as a remote radio unit (remote radio unit, RRU) 810, and one or more baseband units (baseband unit, BBU) (which may also be referred to as a digital unit, digital unit, DU) 820. The RRU 810 may be referred to as a transceiver unit, a transceiver machine, a transceiver circuit, a transceiver, or the like, and may include at least one antenna 811 and a radio frequency unit 811. The RRU 810 is mainly configured to: send and receive a radio frequency signal and perform conversion between a radio frequency signal and a baseband signal, for example, is configured to send the signaling message described in the foregoing embodiment to a terminal device. The BBU 820 part is mainly configured to perform baseband processing, control a base station, and the like. The RRU 810 and the BBU 820 may be physically disposed together, or may be physically separated, that is, in a distributed base station.

The BBU 820 is a control center of the base station, may also be referred to as a processing unit, and is mainly configured to implement a baseband processing function such as channel encoding, multiplexing, modulation, or spreading. For example, the BBU (the processing unit) 820 may be configured to control a base station 40 to perform the operation procedure related to the network device in the foregoing method embodiment.

In an example, the BBU 820 may include one or more boards, and a plurality of boards may jointly support a radio access network (such as an LTE system or a 5G system) of a single access standard, or may separately support radio access networks of different access standards. The BBU 820 further includes a memory 821 and a processor 822. The memory 821 is configured to store necessary instructions and data. For example, the memory 821 stores the codebook and the like in the foregoing embodiments. The processor 822 is configured to control the base station to perform a necessary action, for example, is configured to control the base station to perform the operation procedure related to the network device in the foregoing method embodiment. The memory 821 and the processor 822 may serve one or more boards. In other words, a memory and a processor may be independently disposed on each board. Alternatively, a plurality of boards may share a same memory and a same processor. In addition, a necessary circuit may be further disposed on each board.

In a possible implementation, with development of a system-on-a-chip (system-on-chip, SoC) technology, all or some functions of the part 820 and the part 810 may be implemented by using the SoC technology, for example, implemented through a base station function chip. The base station function chip integrates components such as a processor, a memory, and an antenna port. A program of a base station-related function is stored in the memory. The processor executes the program to implement the base station-related function. Optionally, the base station chip can read a memory outside the chip to implement the base station-related function.

It should be understood that the structure of the access device shown in FIG. 11 is merely a possible form, and should not constitute any limitation on the embodiments of this application. In this application, there may be a base station structure in another form in the future.

According to the methods provided in the embodiments of this application, an embodiment of this application further provides a communications system. The system includes the first access device and the one or more first devices above.

In an implementation, the communications system may further include the one or more second access devices and the one or more second devices above.

According to the methods provided in the embodiments of this application, an embodiment of this application further provides another communications system. The system includes the first access device, the one or more second access devices, the one or more first devices, and the one or more second devices above. It should be understood that the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It can be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any other combination thereof. When the software is used to implement the embodiments, all or some of the foregoing embodiments may be implemented in a form of a computer program product. The computer program product includes one or more computer instructions or computer programs. When the program instructions or the computer programs are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not indicate an execution sequence in the foregoing embodiments of this application. The execution sequence of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application. It can be clearly understood by a person skilled in the art that, for the purpose of convenient and brief description, for a detailed working process of the foregoing system, apparatus, and unit, refer to a corresponding process in the foregoing method embodiment, and details are not described herein again. In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of the embodiments. In addition, function units in the embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example a USB flash drive, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communications method, comprising:
receiving configuration information from a first access device, wherein the configuration information indicating at least one resource pool used for inter-device communication, and the resource pool comprises a plurality of resources; and
sending a measurement report to the first access device, wherein the measurement report comprises an index of a candidate resource in the resource pool and at least one of the following information:
a first threshold used by a first device for selecting the candidate resource, a priority of the candidate resource, signal quality of the candidate resource, a type of the resource pool to which the candidate resource belongs, and a communications status in which the first device selects the candidate resource, wherein the type of the resource pool comprises a common type, an exceptional type, or a dedicated type, and the communications status comprises a connected state, a non-connected state, or a radio link failure state; and
the candidate resource comprises one or more resources.

2. The method according to claim 1, wherein the first threshold comprises a priority threshold, and the candidate resource is a resource whose priority is less than or equal to the priority threshold in the resource pool, wherein the priority threshold comprises a basic priority threshold, or the priority threshold comprises a basic priority threshold and a threshold obtained after the basic priority threshold is adjusted P1 times; or
the first threshold comprises a signal quality threshold, and the candidate resource is a resource whose signal quality is less than or equal to the signal quality threshold in the resource pool, wherein the signal quality threshold comprises a basic signal quality threshold, or the priority threshold comprises a basic signal quality threshold and a threshold obtained after the basic signal quality threshold is adjusted P2 times.

3. The method according to claim 2, wherein the method further comprises:
receiving update information from the first access device, wherein the update information is used to indicate an updated basic priority threshold or an updated basic signal quality threshold, and the updated basic priority threshold or the updated basic signal quality threshold is obtained through updating by the first access device based on the measurement report.

4. The method according to any one of claims 1 to 3, wherein the resource pool comprises a resource scheduled by the first access device for the first device, or the resource pool comprises a resource autonomously selected by the first device.

5. The method according to any one of claims 1 to 4, wherein the measurement report is recorded in a minimization of drive test log of the first device; or
the measurement report is recorded in mobility history information of the first device.

6. The method according to any one of claims 1 to 5, wherein the first access device comprises a distributed unit DU, or the first access device comprises a centralized unit CU.

7. The method according to any one of claims 1 to 6, wherein the measurement report is periodically sent by the first device; or
the measurement report is sent by the first device after the first device determines that a first event occurs.

8. A wireless communications method, comprising:
sending configuration information to a first device, wherein the configuration information indicating at least one resource pool used for inter-device communication, and the resource pool comprises a plurality of resources; and
receiving a measurement report from the first device, wherein the measurement report comprises an index of a candidate resource in the resource pool and at least one of the following information:
a first threshold used by the first device for selecting the candidate resource, a priority of the candidate resource, signal quality of the candidate resource, a type of the resource pool to which the candidate resource belongs, and a communications status in which the terminal device selects the candidate resource, wherein the type of the resource pool comprises a common type, an exceptional type, or a dedicated type, and the communications status comprises a connected state, a non-connected state, or a radio link failure state; and
the candidate resource comprises one or more resources.

9. The method according to claim 8, wherein the first threshold comprises a priority threshold, and the candidate resource is a resource whose priority is less than or equal to the priority threshold in the resource pool, wherein the priority threshold comprises a basic priority threshold, or the priority threshold comprises a basic priority threshold and a threshold obtained after the basic priority threshold is adjusted P1 times; or
the first threshold comprises a signal quality threshold, and the candidate resource is a resource whose signal quality is less than or equal to the signal quality threshold in the resource pool, wherein the signal quality threshold comprises a basic signal quality threshold, or the priority threshold comprises a basic signal quality threshold and a threshold obtained after the basic signal quality threshold is adjusted P2 times.

10. The method according to claim 9, wherein the method further comprises:
updating the basic priority threshold or the basic signal quality threshold based on the measurement report; and
sending first update information to the first device, wherein the update information is used to indicate an updated basic priority threshold and/or an updated basic signal quality threshold.

11. The method according to any one of claims 8 to 10, wherein the method further comprises:
updating a scheduling mode of the terminal device based on the measurement report; or
updating the resource pool based on the measurement report; or
updating, based on the measurement report, a zone configured by the first access device.

12. The method according to any one of claims 8 to 11, wherein the measurement report is recorded in a minimization of drive test log of the first device; or
the measurement report is recorded in mobility history information of the first device.

13. The method according to any one of claims 8 to 12, wherein the method further comprises:
receiving first resource indication information sent by a second access device, wherein the first resource indication information is used to indicate a resource pool used by the second access device; and
updating, based on the first resource indication information, a resource pool used by the first access device.

14. The method according to claim 13, wherein the first resource indication information is further used to indicate a type of the resource pool used by the second access device, and the type comprises a common type, an exceptional type, or a dedicated type.

15. The method according to claim 13 or 14, wherein the first resource indication information comprises information about at least one of the following parameters: a cell identifier corresponding to the resource pool used by the second access device, a zone identifier corresponding to the resource pool used by the second access device, a sidelink subframe corresponding to the resource pool used by the second access device, a start resource block corresponding to the resource pool used by the second access device, a quantity of subchannels corresponding to the resource pool used by the second access device, and a size of a subchannel corresponding to the resource pool used by the second access device.

16. The method according to any one of claims 8 to 12, wherein the method further comprises:
sending second resource indication information to the second access device or an access management device, wherein the second resource indication information is used to indicate a resource pool used by the first access device.

17. The method according to claim 16, wherein the second resource indication information is further used to indicate a type of the resource pool used by the first access device, and the type comprises a common type, an exceptional type, or a dedicated type.

18. The method according to claim 16 or 17, wherein the second resource indication information comprises information about at least one of the following parameters: a cell identifier corresponding to the resource pool used by the first access device, a zone identifier corresponding to the resource pool used by the first access device, a sidelink subframe corresponding to the resource pool used by the first access device, a start resource block corresponding to the resource pool used by the first access device, a quantity of subchannels corresponding to the resource pool used by the first access device, and a size of a subchannel corresponding to the resource pool used by the first access device.

19. The method according to claim 14 or 17, wherein the common type comprises a common receive type and a common transmit type.

20. The method according to any one of claims 8 to 19, wherein the first access device comprises a distributed unit DU; or
the first access device comprises a centralized unit CU.

21. A wireless communications apparatus, comprising:
a transceiver unit, configured to: receive configuration information from a first access device, wherein the configuration information indicating at least one resource pool used for inter-device communication, and the resource pool comprises a plurality of resources; and send a measurement report to the first access device, wherein the measurement report comprises an index of a candidate resource in the resource pool and at least one of the following information:
a first threshold used when the apparatus selects the candidate resource, a priority of the candidate resource, signal quality of the candidate resource, a type of the resource pool to which the candidate resource belongs, and a communications status in which the apparatus selects the candidate resource, wherein the type of the resource pool comprises a common type, an exceptional type, or a dedicated type, and the communications status comprises a connected state, a non-connected state, or a radio link failure state; and
the candidate resource comprises one or more resources.

22. The apparatus according to claim 21, wherein the first threshold comprises a priority threshold, and the candidate resource is a resource whose priority is less than or equal to the priority threshold in the resource pool, wherein the priority threshold comprises a basic priority threshold, or the priority threshold comprises a basic priority threshold and a threshold obtained after the basic priority threshold is adjusted P1 times; or
the first threshold comprises a signal quality threshold, and the candidate resource is a resource whose signal quality is less than or equal to the signal quality threshold in the resource pool, wherein the signal quality threshold comprises a basic signal quality threshold, or the priority threshold comprises a basic signal quality threshold and a threshold obtained after the basic signal quality threshold is adjusted P2 times.

23. The apparatus according to claim 22, wherein the transceiver unit is further configured to receive update information from the first access device, wherein the update information is used to indicate an updated basic priority threshold or an updated basic signal quality threshold, and the updated basic priority threshold or the updated basic signal quality threshold is obtained through updating by the first access device based on the measurement report.

24. The apparatus according to any one of claims 21 to 23, wherein the resource pool comprises a resource scheduled by the first access device for the apparatus, or the resource pool comprises a resource autonomously selected by the apparatus.

25. The apparatus according to any one of claims 21 to 24, wherein the measurement report is recorded in a minimization drive test log of the apparatus; or
the measurement report is recorded in mobility history information of the apparatus.

26. The apparatus according to any one of claims 21 to 25, wherein the first access device comprises a distributed unit DU, or the first access device comprises a centralized unit CU.

27. The apparatus according to any one of claims 21 to 26, wherein the measurement report is periodically sent by the transceiver unit; or
the measurement report is sent by the apparatus after the apparatus determines that a first event occurs.

28. A wireless communications apparatus, comprising:
a transceiver unit, configured to: send configuration information to a first device, wherein the configuration information indicating at least one resource pool used for inter-device communication, and the resource pool comprises a plurality of resources; and receive a measurement report from the first device, wherein the measurement report comprises an index of a candidate resource in the resource pool and at least one of the following information:
a first threshold used by the first device for selecting the candidate resource, a priority of the candidate resource, signal quality of the candidate resource, a type of the resource pool to which the candidate resource belongs, and a communications status in which the terminal device selects the candidate resource, wherein the type of the resource pool comprises a common type, an exceptional type, or a dedicated type, and the communications status comprises a connected state, a non-connected state, or a radio link failure state; and
the candidate resource comprises one or more resources.

29. The apparatus according to claim 28, wherein the first threshold comprises a priority threshold, and the candidate resource is a resource whose priority is less than or equal to the priority threshold in the resource pool, wherein the priority threshold comprises a basic priority threshold, or the priority threshold comprises a basic priority threshold and a threshold obtained after the basic priority threshold is adjusted P1 times; or
the first threshold comprises a signal quality threshold, and the candidate resource is a resource whose signal quality is less than or equal to the signal quality threshold in the resource pool, wherein the signal quality threshold comprises a basic signal quality threshold, or the priority threshold comprises a basic signal quality threshold and a threshold obtained after the basic signal quality threshold is adjusted P2 times.

30. The apparatus according to claim 29, wherein the apparatus further comprises a processing unit, wherein the processing unit is configured to update the basic priority threshold or the basic signal quality threshold based on the measurement report; and
the transceiver unit is further configured to send first update information to the first device, wherein the update information is used to indicate an updated basic priority threshold and/or an updated basic signal quality threshold.

31. The apparatus according to any one of claims 28 to 30, wherein the apparatus further comprises a processing unit;
the processing unit is configured to update a scheduling mode of the terminal device based on the measurement report; or
the processing unit is configured to update the resource pool based on the measurement report; or
the processing unit is configured to update, based on the measurement report, a zone configured by the apparatus.

32. The apparatus according to any one of claims 28 to 31, wherein the measurement report is recorded in a minimization drive test log of the first device; or
the measurement report is recorded in mobility history information of the first device.

33. The apparatus according to any one of claims 28 to 32, wherein the transceiver unit is further configured to receive first resource indication information sent by a second access device, wherein the first resource indication information is used to indicate a resource pool used by the second access device; and
the apparatus further comprises:
a processing unit, configured to update, based on the first resource indication information, a resource pool used by the apparatus.

34. The apparatus according to claim 33, wherein the first resource indication information is further used to indicate a type of the resource pool used by the second access device, and the type comprises a common type, an exceptional type, or a dedicated type.

35. The apparatus according to claim 33 or 34, wherein the first resource indication information comprises information about at least one of the following parameters: a cell identifier corresponding to the resource pool used by the second access device, a zone identifier corresponding to the resource pool used by the second access device, a sidelink subframe corresponding to the resource pool used by the second access device, a start resource block corresponding to the resource pool used by the second access device, a quantity of subchannels corresponding to the resource pool used by the second access device, and a size of a subchannel corresponding to the resource pool used by the second access device.

36. The apparatus according to any one of claims 28 to 32, wherein the transceiver unit is further configured to send second resource indication information to the second access device or an access management device, wherein the second resource indication information is used to indicate a resource pool used by the apparatus.

37. The apparatus according to claim 36, wherein the second resource indication information is further used to indicate a type of the resource pool used by the apparatus, and the type comprises a common type, an exceptional type, or a dedicated type.

38. The apparatus according to claim 36 or 37, wherein the second resource indication information comprises information about at least one of the following parameters: a cell identifier corresponding to the resource pool used by the apparatus, a zone identifier corresponding to the resource pool used by the apparatus, a sidelink subframe corresponding to the resource pool used by the apparatus, a start resource block corresponding to the resource pool used by the apparatus, a quantity of subchannels corresponding to the resource pool used by the apparatus, and a size of a subchannel corresponding to the resource pool used by the apparatus.

39. The apparatus according to claim 34 or 37, wherein the common type comprises a common receive type and a common transmit type.

40. The apparatus according to any one of claims 28 to 39, wherein the apparatus is configured in or is a distributed unit DU; or
the apparatus is configured in or is a centralized unit CU.

41. A communications device, comprising a communications interface and at least one processor, wherein the communications interface and the at least one processor are connected to each other through a line, and the communications interface is configured to perform information receiving and sending operations performed on a side of the communications device in the method according to any one of claims 1 to 7; and
the at least one processor invokes instructions to perform an information processing or control operation performed on the communications device in the method according to any one of claims 1 to 7.

42. The communications device according to claim 41, wherein the communications device is a terminal device.

43. A communications device, comprising a communications interface and at least one processor, wherein the communications interface and the at least one processor are connected to each other through a line, and the communications interface is configured to perform information receiving and sending operations performed on a side of the communications device in the method according to any one of claims 8 to 20; and
the at least one processor invokes instructions to perform an information processing or control operation performed on a side of the communications device in the method according to any one of claims 8 to 20.

44. The communications device according to claim 43, wherein the communications device is an access network device.

45. A chip system, wherein the chip system comprises at least one processor and an interface circuit, the interface circuit and the at least one processor are connected to each other through a line, and the processor runs instructions to perform the method according to any one of claims 1 to 7 or the method according to any one of claims 8 to 20.

46. A communications apparatus, configured to perform the method according to any one of claims 1 to 8.

47. A communications apparatus, configured to perform the method according to any one of claims 9 to 20.

48. A computer program product comprising instructions, wherein when the computer program product is run on a computer, the computer is enabled to perform the method according to any one of claims 1 to 7 or the method according to any one of claims 8 to 20.

49. A computer-readable storage medium, comprising instructions, wherein when the instructions are run on a computer, the computer is enabled to perform the method according to any one of claims 1 to 7 or the method according to any one of claims 8 to 20.

50. A communications system, comprising the communications apparatus according to any one of claims 21 to 27 and/or the apparatus according to any one of claims 28 to 40.
